(19) Europäisches Patentamt
European Patent Office
Office européen des brevets

(11) **EP 4 440 016 B1**

(12) **EUROPEAN PATENT SPECIFICATION**

(45) Date of publication and mention
of the grant of the patent:
**04.03.2026 Bulletin 2026/10**

(21) Application number: **22909937.9**

(22) Date of filing: **19.12.2022**

(51) International Patent Classification (IPC):
*H04L 1/00* *(2006.01)*

(52) Cooperative Patent Classification (CPC):
**H04L 1/0057; H04L 1/0041; H04L 1/0045;
H04L 1/0071; H04L 1/0075**

(86) International application number:
**PCT/CN2022/140005**

(87) International publication number:
**WO 2023/116625 (29.06.2023 Gazette 2023/26)**

(54) **DATA CODING METHOD AND COMMUNICATION DEVICES**

DATENCODIERUNGSVERFAHREN UND KOMMUNIKATIONSVORRICHTUNGEN

PROCÉDÉ DE CODAGE DE DONNÉES ET DISPOSITIFS DE COMMUNICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.12.2021 CN 202111571393**

(43) Date of publication of application:
**02.10.2024 Bulletin 2024/40**

(73) Proprietor: **Huawei Technologies Co., Ltd.
Shenzhen, Guangdong 518129 (CN)**

(72) Inventors:
• **WU, Fangzhou
Shenzhen, Guangdong 518129 (CN)**
• **ZHU, Huiying
Shenzhen, Guangdong 518129 (CN)**
• **TAN, Zhiyuan
Shenzhen, Guangdong 518129 (CN)**
• **DONG, Pengpeng
Shenzhen, Guangdong 518129 (CN)**

(74) Representative: **Gill Jennings & Every LLP
The Broadgate Tower
20 Primrose Street
London EC2A 2ES (GB)**

(56) References cited:
WO-A1-2021/169522    WO-A1-2021/179827
WO-A1-2021/233929    WO-A1-2021/249080
US-A1- 2007 300 134    US-A1- 2018 212 713
US-A1- 2022 416 934

• **WUNDERLICH SIMON ET AL: "Caterpillar RLNC
(CRLNC): A Practical Finite Sliding Window
RLNC Approach", IEEE ACCESS, vol. 5, 27
September 2017 (2017-09-27), pages 20183 -
20197, XP011672158, DOI: 10.1109/
ACCESS.2017.2757241**

## Description

### TECHNICAL FIELD

This application relates to the field of communication technologies, and in particular, to a data encoding method and a communication apparatus.

### BACKGROUND

With the development of a communication network, people have increasingly high requirements on a data transmission rate and data transmission reliability. Discussion of the 3rd Generation Partnership Project (the 3rd Generation Partnership Project, 3GPP) Release 18 points out that a linear packet coding (Linear Packet Coding, LPC) technology can improve data transmission efficiency without reducing data transmission reliability. A method specifically includes the following steps. First, a transmitting end segments an upper-layer protocol data unit (Protocol Data Unit, PDU) to obtain K original data packets. Then, the transmitting end encodes the K original data packets by using a linear block code (M, K) to obtain M encoded packets. The transmitting end adds a packet header to each encoded packet to obtain M LPC PDUs, and transmits the M LPC PDUs to a lower layer. After obtaining at least K correct LPC PDUs, a receiving end obtains encoded packets by removing packet headers from the LPC PDUs. Then, the receiving end determines the K original data packets by decoding the at least K encoded packets. The receiving end may restore the upper-layer PDU by cascading the K original data packets. According to the method, a larger quantity of original data packets obtained through segmentation indicates higher packet header overheads of an encoded packet, and data transmission efficiency is still affected.

WO 2021/169522 A1 describes a data processing method and apparatus to improve spectral efficiency in data transmission employing network coding.

WUNDERLICH SIMON ET AL: "Caterpillar RLNC (CRLNC): A Practical Finite Sliding Window RLNC Approach", IEEE ACCESS, vol. 5, pages 20183-20197, XP011672158 describes a practical finite sliding window random linear network coding (RLNC) approach, caterpillar RLNC (CRLNC), that does not require feedback.

US 2007/300134 A1 describes a data transmitting device and a data receiving device capable of conducting error correction using a forward error correction (FEC) stream without a necessity for feedback to a data transmitting device from a data receiving device.

### SUMMARY

This application provides a data encoding method and a communication apparatus, to help reduce header overheads of an encoded packet.

According to a first aspect, this application provides a data encoding method according to claim 1. The method includes: obtaining S encoded packets corresponding to L first protocol data units PDUs, where one first PDU corresponds to one or more encoded packets, L is a positive integer, and S is a positive integer; performing cascading on each of N encoded packet groups to obtain N second PDUs, where the N encoded packet groups are obtained by dividing the S encoded packets, one encoded packet group includes one or more encoded packets, different encoded packet groups include different encoded packets, and any two encoded packets included in a same encoded packet group correspond to different first PDUs; one second PDU corresponds to one encoded packet group and includes all encoded packets in the encoded packet group; and a PDU header of the second PDU carries a first sequence number and a bitmap, the first sequence number is used to determine an encoded packet number corresponding to the encoded packet included in the second PDU, the bitmap includes H bits, one bit corresponds to one first PDU, the bit indicates whether the second PDU includes an encoded packet in the first PDU corresponding to the bit, a quantity of encoded packets included in one second PDU is less than or equal to H, and H is a positive integer; and outputting the N second PDUs.

According to the method described in the first aspect, the PDU header of the second PDU may carry some parameters of a packet header of the encoded packet, so that header overheads of the encoded packet can be reduced, and data transmission efficiency can be improved.

In a possible implementation, a quantity of encoded packets included in one encoded packet group is not greater than A, a quantity of encoded packets corresponding to one first PDU is not greater than N, L is less than or equal to H, A is less than or equal to H, A is greater than or equal to L, and A is a positive integer greater than or equal to 1.

In a possible implementation, a quantity of encoded packets included in one encoded packet group is not greater than A, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$, and both A and X are positive integers greater than 1.

In a possible implementation, a quantity of encoded packets included in one encoded packet group is not greater than A, a quantity of encoded packets corresponding to one first PDU is not greater than B, A is less than or equal to L, A is less than or equal to H, N=Y×B, $Y=\lceil L \div A \rceil$ , and both A and Y are positive integers greater than 1.

In a possible implementation, a packet header of the encoded packet includes first information, and the first information is used to determine a quantity of original data packets of the first PDU corresponding to the encoded packet. According to the method, a receiving end can determine, based on the quantity of original data packets, whether the first PDU can be restored, to improve decoding efficiency.

In a possible implementation, the method further includes: encoding second information to generate first encoded information, where the second information indicates the quantity of original data packets of the first PDU, a length of the second information is W bits, a length of the first encoded information is E bits, $E \geq W$, and both W and E are positive integers. The first PDU corresponds to M encoded packets, first information in the M encoded packets forms the first encoded information, M is a positive integer, and E is greater than or equal to M. According to the method, a packet header parameter of the encoded packet is further compressed, thereby reducing header overheads.

In a possible implementation, the PDU header of the second PDU carries a second sequence number, and the second sequence number is used to determine a sequence number of a first PDU corresponding to the encoded packet included in the second PDU. According to the method, a receiving end can determine a sequence number of a first PDU corresponding to an encoded packet included in a currently received second PDU, to improve decoding efficiency.

In a possible implementation, the packet header of the encoded packet further carries third information, and the third information is used to determine a sequence number of the first PDU corresponding to the encoded packet. According to the method, a receiving end can determine the sequence number of the first PDU corresponding to the encoded packet, to improve decoding efficiency.

In a possible implementation, the method further includes: encoding fourth information to generate second encoded information, where the fourth information indicates the sequence number of the first PDU corresponding to the encoded packet, a length of the fourth information is Q bits, a length of the second encoded information is P bits, $P \geq Q$, and both P and Q are positive integers. The first PDU corresponds to M encoded packets, third information in the M encoded packets forms the second encoded information, M is a positive integer, and P is greater than or equal to M. According to the method, a packet header parameter of the encoded packet is further compressed, thereby reducing header overheads.

According to a second aspect, this application provides a data decoding method according to claim 7. The method includes: obtaining G second protocol data units PDUs, where one second PDU corresponds to one encoded packet group and includes all encoded packets in the encoded packet group; one encoded packet group includes one or more encoded packets, different encoded packet groups include different encoded packets, and any two encoded packets included in a same encoded packet group correspond to different first PDUs; and a PDU header of the second PDU carries a first sequence number and a bitmap, the first sequence number is used to determine an encoded packet number corresponding to the encoded packet included in the second PDU, the bitmap includes H bits, one bit corresponds to one first PDU, the bit indicates whether the second PDU includes an encoded packet in the first PDU corresponding to the bit, a quantity of encoded packets included in one second PDU is less than or equal to H, and H is a positive integer; segmenting the G second PDUs to obtain F encoded packets, where F is a positive integer; and restoring one or more first PDUs based on first sequence numbers and bitmaps that are carried in PDU headers of the G second PDUs.

In a possible implementation, a quantity of encoded packets included in one encoded packet group is not greater than A, a quantity of encoded packets corresponding to one first PDU is not greater than N, the G second PDUs correspond to L first PDUs, L is less than or equal to H, A is less than or equal to H, A is greater than or equal to L, and L and A are positive integers greater than 1. For beneficial effects of the second aspect, refer to the content described in the first aspect.

In a possible implementation, a quantity of encoded packets included in one encoded packet group is not greater than A, the G second PDUs correspond to L first PDUs, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$ , and L, A, and X are all positive integers greater than 1.

In a possible implementation, a quantity of encoded packets included in one encoded packet group is not greater than A, a quantity of encoded packets corresponding to one first PDU is not greater than B, the G second PDUs correspond to L first PDUs, A is less than or equal to L, A is less than or equal to H, N=Y×B, $Y=\lceil L \div A \rceil$ , and A, L, and Y are all positive integers greater than 1.

In a possible implementation, a specific implementation of the restoring one or more first PDUs is: determining a quantity of original data packets of a target first PDU based on first information carried in a packet header of an encoded packet corresponding to the target first PDU; and if in the F encoded packets, a quantity V of encoded packets corresponding to the target first PDU is greater than or equal to the quantity of original data packets of the target first PDU, restoring the target first PDU based on the V encoded packets corresponding to the target first PDU, where a total quantity of encoded packets corresponding to the target first PDU is M, V is less than or equal to M, and V is a positive integer.

In a possible implementation, a specific implementation of the determining a quantity of original data packets of a target first PDU based on first information carried in a packet header of an encoded packet corresponding to the target first PDU is: restoring first encoded information based on first information carried in packet headers of the V encoded packets corresponding to the target first PDU, where the first encoded information is generated by encoding second information, the second information indicates the quantity of original data packets of the target first PDU, a length of the second information is W bits, a length of the first information is R bits, $R \times V \geq W$, and both W and R are positive integers; and determining the quantity of original data packets of the target first PDU based on the second information corresponding to the first encoded information.

In a possible implementation, the PDU header of the second PDU carries a second sequence number, and the second sequence number is used to determine a sequence number of a first PDU corresponding to the encoded packet included in the second PDU.

In a possible implementation, the packet header of the encoded packet corresponding to the target first PDU further includes third information, and the third information is used to determine a sequence number of the target first PDU.

In a possible implementation, the method further includes: restoring second encoded information based on third information carried in the packet headers of the V encoded packets corresponding to the target first PDU, where a length of fourth information is Q bits, the second encoded information is generated by encoding the fourth information, the fourth information indicates the sequence number of the target first PDU, a length of the third information is U bits, $U \times V \geq Q$, and both Q and U are positive integers and greater than 1; and determining the sequence number of the target first PDU based on the fourth information corresponding to the second encoded information.

According to a third unclaimed aspect, this application provides a communication apparatus. The apparatus may be a first communication device, an apparatus in the first communication device, or an apparatus that can be used together with the first communication device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effects thereof, refer to the method in the first aspect and the beneficial effects thereof. Repeated parts are not described again.

According to a fourth unclaimed aspect, this application provides a communication apparatus. The apparatus may be a second communication device, an apparatus in the second communication device, or an apparatus that can be used together with the second communication device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effects thereof, refer to the method in the second aspect and the beneficial effects thereof. Repeated parts are not described again.

According to a fifth aspect, this application provides a communication apparatus according to claim 13. The communication apparatus includes a processor, and when the processor invokes a computer program in a memory, the method according to the first aspect or the second aspect is performed.

In a possible implementation, the communication apparatus further includes the memory, and the memory and the processor are coupled to each other. Optionally, the memory and the processor are integrated together.

In a possible implementation, the communication apparatus further includes a transceiver, and the transceiver is configured to receive and send data and/or signaling.

According to a sixth unclaimed aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or the second aspect by using a logic circuit or by executing code instructions.

According to a seventh aspect, this application provides a computer-readable storage medium according to claim 14. The storage medium stores a computer program or instructions, and when the computer program or the instructions are executed by a communication apparatus, the method according to the first aspect or the second aspect is implemented.

According to an eighth aspect, an embodiment of this application provides a computer program or a computer program product according to claim 15, including code or instructions. When the code or the instructions are run on a computer, the computer is enabled to perform the method according to the first aspect or the second aspect.

According to a ninth unclaimed aspect, an embodiment of this application provides a communication system. The system includes the communication apparatuses provided in the third aspect and the fourth aspect.

BRIEF DESCRIPTION OF DRAWINGS

FIG. 1 is a diagram of an architecture of a communication network according to an embodiment of this application;
FIG. 2 is a schematic flowchart of a data encoding and decoding method according to an embodiment of this application;
FIG. 3 is a diagram of information encoding according to an embodiment of this application;
FIG. 4 is another diagram of information encoding according to an embodiment of this application;
FIG. 5 is a diagram of a method for processing a first PDU according to an embodiment of this application;
FIG. 6 is a diagram of a structure of an encoded packet group according to an embodiment of this application;
FIG. 7 is a diagram of an encoded packet interleaving method according to an embodiment of this application;
FIG. 8 is a diagram of another encoded packet interleaving method according to an embodiment of this application;
FIG. 9 is a diagram of another encoded packet interleaving method according to an embodiment of this application;
FIG. 10 is a diagram of another encoded packet interleaving method according to an embodiment of this application;
FIG. 11 is a diagram of another encoded packet interleaving method according to an embodiment of this application;
FIG. 12 is a diagram of another encoded packet interleaving method according to an embodiment of this application;
FIG. 13 is a diagram of a structure of a PDU header of a second PDU according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of a chip according to an embodiment of this application.

DESCRIPTION OF EMBODIMENTS

The following further describes specific embodiments of this application in detail with reference to the accompanying drawings.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions in embodiments of this application may be applied to various communication systems, for example, a satellite communication system and a conventional mobile communication system. The satellite communication system may be integrated with the conventional mobile communication system (namely, a terrestrial communication system). The communication systems are, for example, a wireless local area network (wireless local area network, WLAN) communication system, a long term evolution (long term evolution, LTE) system, a $5^{th}$ generation ($5^{th}$ generation, 5G) system or a new radio (new radio, NR) system, a $6^{th}$ generation ($6^{th}$ generation, 6G) system, and another future communication system. The communication systems further support a communication system that integrates a plurality of wireless technologies. For example, the communication systems may be further used in a system that integrates a terrestrial mobile communication network and a non-terrestrial network (non-terrestrial network, NTN) such as an uncrewed aerial vehicle, a satellite communication system, or a high altitude platform station (high altitude platform station, HAPS) communication system.

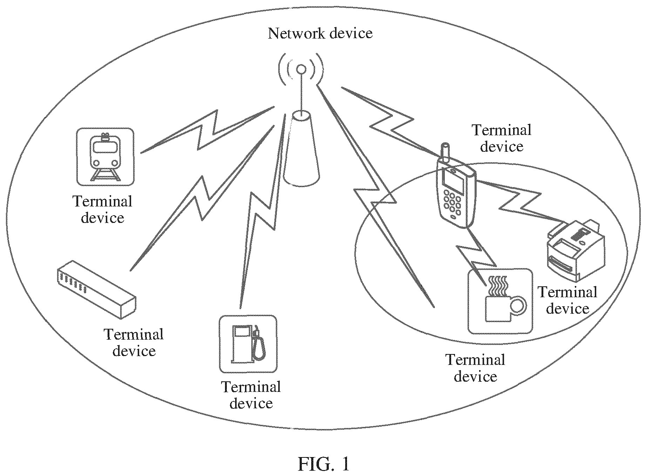

FIG. 1 shows an example of a communication system applicable to an embodiment of this application. The communication system includes at least one network device and at least one terminal device. FIG. 1 includes a network device and six terminal devices. The six terminal devices may each be a cellular phone, a smartphone, a portable computer, a handheld communication device, a handheld computing device, a satellite radio apparatus, a global positioning system, a PDA, and/or any other suitable device configured to perform communication in a wireless communication system, and all the terminal devices may be connected to the network device. All the six terminal devices can communicate with the network device. Certainly, a quantity of terminal devices in FIG. 1 is merely an example. There may further be fewer or more terminal devices.

The network device in this application may be an evolved NodeB (evolved NodeB, eNB or eNodeB) in LTE, a base station in a 5G network, a broadband network gateway (broadband network gateway, BNG), an aggregation switch, an access device in the non-$3^{rd}$ Generation Partnership Project ($3^{rd}$ generation partnership project, 3GPP), or the like. This is not specifically limited in embodiments of this application. Optionally, the base station in embodiments of this application may include base stations in various forms, for example, a macro base station, a micro base station (also referred to as a small cell), a relay station, an access point, a next generation NodeB (gNodeB, gNB), a transmission and reception point (transmission and reception point, TRP), a transmission point (transmission point, TP), a mobile switching center, and a device that functions as a base station in device-to-device (Device-to-Device, D2D) communication, vehicle-to-everything (vehicle-to-everything, V2X) communication, machine-to-machine (machine-to-machine, M2M) communication, or internet of things (Internet of Things) communication. This is not specifically limited in embodiments of this application.

The network device may communicate and interact with a core network device, and provide a communication service for the terminal device. The core network device is, for example, a device in a 5G core network (5G core network, 5GC). As a bearer network, the core network provides an interface to a data network, provides a communication connection, authentication, management, and policy control for user equipment (user equipment, UE), bears data services, and the like. The network device may be connected to the core network device in a wireless or wired manner. The core network device and the network device may be different physical devices that are independent of each other; or a function of the core network device and a logical function of the network device are integrated into a same physical device; or some functions of the core network device and some functions of the network device are integrated into a same physical device.

The terminal device mentioned in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to the wireless modem, a vehicle-mounted device, a communication device carried on high-altitude aircraft, a wearable device, an unmanned aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In addition, in embodiments of this application, the terminal device may be an apparatus configured to implement a function of the terminal, or may be an apparatus, for example, a chip system, that can support the terminal device in implementing the function. The apparatus may be installed in the terminal device. For example, the terminal device may alternatively be a vehicle detector or a sensor in a gas station. The network device may be an apparatus configured to implement a function of the network device. The network device may alternatively be an apparatus, for example, a chip system, that can support the network device in implementing the function, or a combined device or component that can implement the function of the network device. The apparatus may be installed in the network device.

In embodiments of this application, a first communication device on a transmitting end may be the terminal device, and a second communication device on a receiving end may be the network device. Alternatively, a first communication device on a transmitting end may be the network device, and a second communication device on a receiving end may be the terminal device. Alternatively, both a first communication device on a transmitting end and a second communication device on a receiving end are the terminal devices. This is not limited in embodiments of this application.

With the development of a communication network, people have increasingly high requirements on a data transmission rate and data transmission reliability. Discussion of the 3rd Generation Partnership Project (the 3rd Generation Partnership Project, 3GPP) Release 18 points out that a linear packet coding (Linear Packet Coding, LPC) technology can improve data transmission efficiency without reducing data transmission reliability. A method specifically includes the following steps. First, a transmitting end segments an upper-layer protocol data unit (Protocol Data Unit, PDU) to obtain K original data packets. Then, the transmitting end encodes the K original data packets by using a linear block code (M, K) to obtain M encoded packets. The transmitting end adds a packet header to each encoded packet to obtain M LPC PDUs, and transmits the M LPC PDUs to a lower layer. After obtaining at least K correct LPC PDUs, a receiving end obtains encoded packets by removing packet headers from the LPC PDUs. Then, the receiving end determines the K original data packets by decoding the at least K encoded packets. The receiving end may restore the upper-layer PDU by cascading the K original data packets.

The introduction of the LPC technology can improve spectral efficiency without reducing data transmission reliability. A length of a packet data convergence protocol (Packet Data Convergence Protocol, PDCP) PDU is usually 1,500 bytes, and a length of a PDU header of the LPC PDU is usually 3 to 4 bytes. However, as shown in Table 1, a larger quantity of original data packets obtained through segmentation indicates higher header overheads in the conventional technology. As the quantity of original data packets increases, packet header overheads increase greatly, and excessively high header overheads affect data transmission efficiency. In addition, if each LPC packet is encapsulated into a PDU and transmitted to the lower layer, a payload proportion in the PDU decreases significantly (where a payload refers to data other than all packet headers in the PDU). As shown in Table 2, when each LPC PDU is transmitted to a radio link control (Radio Link Control, RLC) layer, a new RLC PDU header is added. A length of the PDU header of an RLC PDU is usually 0 to 5 bytes. As a value of K increases, a payload proportion of each RLC PDU decreases significantly. This also affects data transmission efficiency.

**Table 1**

| Quantity (namely, K) of original data packets | Length of the LPC PDU | Header overhead proportion |
|---|---|---|
| K=2 | 750 bytes+(3 to 4) bytes | 0.40% to 0.53% |
| K=4 | 375 bytes+(3 to 4) bytes | 0.80% to 1.06% |
| K=8 | 150 bytes+(3 to 4) bytes | 2.00% to 2.67% |
| K=12 | 125 bytes+(3 to 4) bytes | 2.40% to 3.20% |

Table 2

| Quantity (namely, K) of original data packets | Length of the RLC PDU | Payload proportion |
|---|---|---|
| K=2 | 750 bytes+(3 to 4) bytes+(0 to 5) bytes | 98.80% to 99.60% |
| K=4 | 375 bytes+(3 to 4) bytes+(0 to 5) bytes | 97.60% to 99.20% |
| K=8 | 150 bytes+(3 to 4) bytes+(0 to 5) bytes | 94.00% to 98.00% |
| K=12 | 125 bytes+(3 to 4) bytes+(0 to 5) bytes | 92.80% to 97.60% |

The following further describes in detail a data encoding method, a data decoding method, and a communication apparatus provided in embodiments of this application.

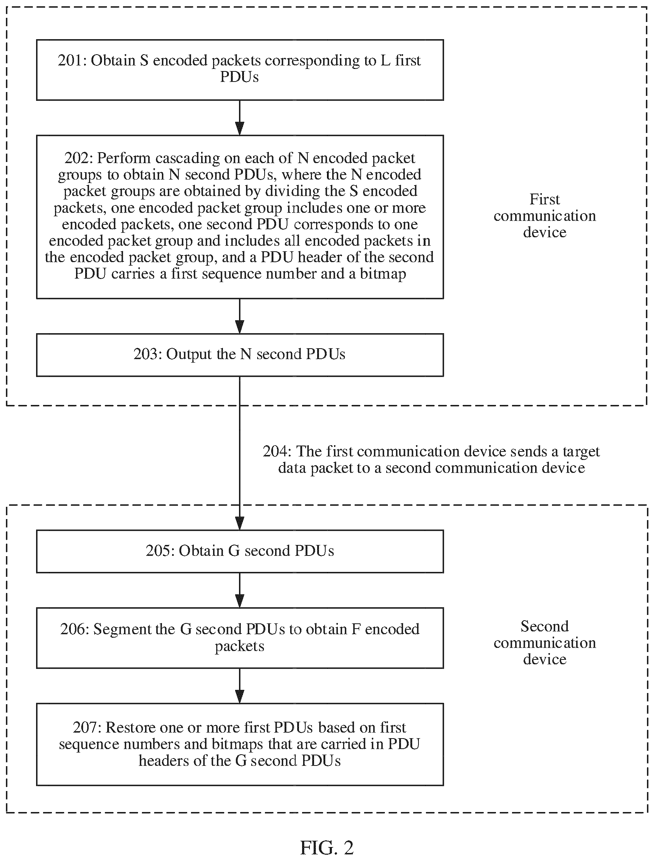

FIG. 2 is a schematic flowchart of a data encoding and decoding method according to an embodiment of this application. As shown in FIG. 2, the method includes the following step 201 to step 207. The method shown in FIG. 2 may be performed by a first communication device and a second communication device. Alternatively, the method shown in FIG. 2 may be performed by a chip in a first communication device and a chip in a second communication device. FIG. 2 is described by using an example in which the method is performed by the first communication device and the second communication device.

201: The first communication device obtains S encoded packets corresponding to L first PDUs.

In this embodiment of this application, the first PDU is a PDU that is output from a first protocol layer and that is received by the first communication device through a second protocol layer, and the first protocol layer is a higher-layer protocol layer corresponding to the second protocol layer. In the L first PDUs, one first PDU corresponds to one or more encoded packets, L is a positive integer, S is a positive integer, and the S encoded packets corresponding to the L first PDUs means that a total quantity of encoded packets corresponding to the L first PDUs is S. For example, in the L first PDUs, a quantity of encoded packets corresponding to an $i^{th}$ first PDU is $M_i$, a value of i is not greater than L and is a positive integer, $S = \sum_{i=1}^{L} M_i$, and $M_i$ is a positive integer.

Optionally, the second protocol layer may be a protocol layer such as a PDCP layer, an RLC layer, or a media access control (Media Access Control, MAC) layer. For example, the second protocol layer is the RLC layer, the first protocol layer is the PDCP layer, and the first PDU is a PDCP PDU.

Optionally, the second protocol layer may alternatively be a new layer between protocol layers such as a PDCP layer, an RLC layer, and a MAC layer. For example, the second protocol layer may be a network coding (Network Coding, NC) layer, the NC layer is between the PDCP layer and the RLC layer, the first protocol layer is the PDCP layer, and the first PDU is a PDCP PDU.

Optionally, the second protocol layer may alternatively be nested in a protocol layer such as a PDCP layer, an RLC layer, or a MAC layer, and is a part of the protocol layer. For example, the second protocol layer may be nested in the RLC layer, and is a part of the RLC layer, the first protocol layer is the PDCP layer, and the first PDU is a PDCP PDU.

In a possible implementation, before the first communication device obtains the S encoded packets corresponding to the L first PDUs, the method further includes: The first communication device receives, through the second protocol layer, a target first PDU output from the first protocol layer, where the target first PDU is any one of the L first PDUs. The first communication device adds an indication field and a padding field to the target first PDU based on a preset length of a data packet, where the indication field indicates a length of the padding field. The first communication device segments, into K original data packets based on a size of the preset data packet, a target first PDU to which the indication field and the padding field are added, where a length of one original data packet is equal to the preset length of the data packet. The first communication device encodes the K original data packets to generate M encoded packets, where a length of the encoded packet is the same as the length of the original data packet, M is greater than K, and a packet header of the encoded packet includes information indicating the quantity K of original data packets. Based on this implementation, the second communication device may restore the target first PDU by obtaining only K or more encoded packets in the M encoded packets, to improve data transmission reliability and also improve spectral efficiency.

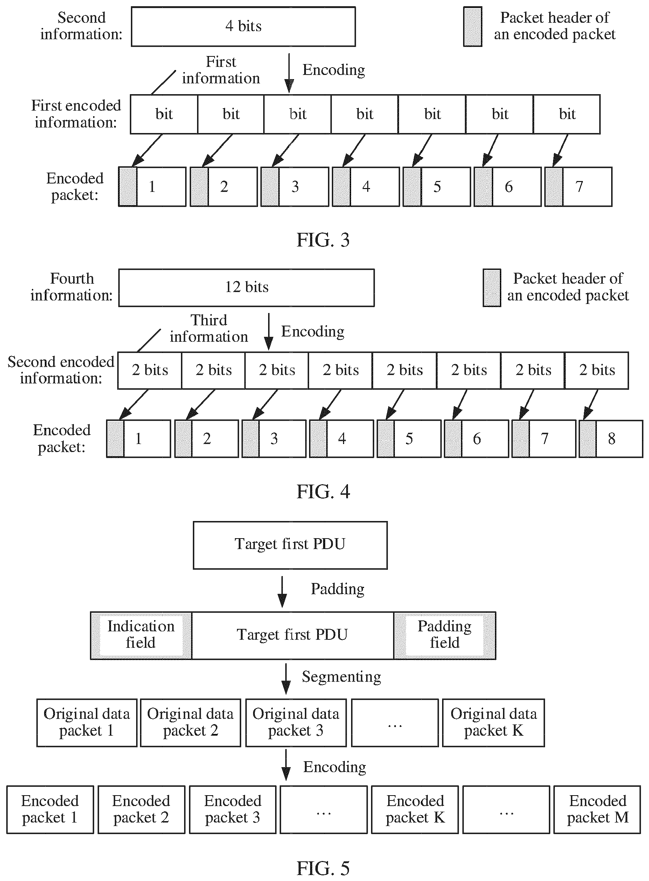

For example, as shown in FIG. 5, when receiving the target first PDU transmitted from the first protocol layer, the first communication device first performs padding processing on the target first PDU, to obtain the target first PDU to which the indication field and the padding field are added. An objective of the padding processing is to segment the padded first PDU into an integer quantity of original data packets based on the size of the preset data packet. In FIG. 5, the indication field is added to a header of the first PDU, and the padding field is added to a tail of the first PDU. Optionally, when an offset is predefined, the indication field may be placed at any location of the first PDU, and a length of the indication field may be predefined. The length of the indication field is not limited in this embodiment of this application. Then, the first communication device segments, based on the preset length of the data packet, the target first PDU to which the indication field and the padding field are added, to obtain the K original data packets, where the length of each original data packet is the preset length of the data packet. Finally, the first communication device may encode the K original data packets to obtain the M encoded packets. Optionally, the first communication device may encode the K original data packets by using a linear block code (M, K) to obtain the M encoded packets. In this implementation, the second communication device may restore the first PDU by obtaining only K or more encoded packets in the M encoded packets.

In a possible implementation, sequence numbers of the L first PDUs may be consecutive, or may be inconsecutive but regular, or may not be regular. This is not limited in this embodiment of this application.

In a possible implementation, a packet header of the encoded packet includes first information, and the first information is used to determine a quantity of original data packets of the first PDU corresponding to the encoded packet. The second communication device may determine, based on the first information of the packet header of the encoded packet, the quantity of original data packets of the first PDU corresponding to the encoded packet, to determine a quantity of encoded packets corresponding to the first PDU that need to be obtained for restoring the first PDU. For example, after determining, based on the packet header of the encoded packet, that the quantity of original data packets of the first PDU corresponding to the encoded packet is K, to determine that K or more encoded packets corresponding to the first PDU need to be obtained, the second communication device can restore the corresponding first PDU.

Optionally, the first information may directly indicate the quantity of original data packets of the first PDU. Based on this implementation, the second communication device may accurately determine the quantity of original data packets of the first PDU by obtaining only one encoded packet corresponding to the first PDU.

Optionally, the first information indirectly indicates the quantity of original data packets of the first PDU, and the second communication device needs to obtain a plurality of encoded packets corresponding to the first PDU to determine the quantity of original data packets of the first PDU. A specific implementation is: The first communication device encodes second information to generate first encoded information, where the second information indicates the quantity of original data packets of the first PDU, a length of the second information is W bits, a length of the first encoded information is E bits, $E \geq W$, and both W and E are positive integers. The first PDU corresponds to M encoded packets, first information in the M encoded packets forms the first encoded information, M is a positive integer, and E is greater than or equal to M. For example, as shown in FIG. 3, the second information indicates the quantity of original data packets of the first PDU. In FIG. 3, the length of the second information is 4 bits. The first communication device encodes the second information to generate 7-bit first encoded information. The first communication device divides the 7-bit first encoded information into seven parts, where one part corresponds to 1-bit first information, and allocates seven pieces of first information to packet headers of seven encoded packets corresponding to the first PDU. The packet header of each encoded packet includes one piece of 1-bit first information. To ensure that at least 1-bit first information can be allocated to the packet header of each encoded packet, if the length of the second information is W bits, the quantity K of original data packets is required to be greater than or equal to W. Compared with a manner in which a packet header of each encoded packet carries 4-bit second information, in this manner, header overheads of the encoded packet are reduced, and in this case, a total length of a plurality of pieces of first information obtained by the second communication device needs to be greater than the length of the second information, so that the second communication device can restore the first encoded information, to determine the quantity of original data packets of the first PDU. In other words, the second communication device needs to receive at least four encoded packets corresponding to the first PDU, in other words, obtain first information from at least four different encoded packets. A length of the four pieces of first information is 4 bits, and is equal to the length, namely, 4 bits, of the second information, so that the first encoded information can be restored, and the quantity of original data packets of the first PDU can be determined. This implementation helps reduce the packet header overheads of the encoded packet.

Further, optionally, the first communication device may encode the second information by using a linear block code (E, W), to generate the first encoded information. In addition, the first communication device may alternatively encode the second information in another encoding manner. This is not limited in this embodiment of this application.

In a possible implementation, the packet header of the encoded packet further carries third information, and the third information is used to determine the sequence number of the first PDU corresponding to the encoded packet. When the packet header of the encoded packet carries the third information, the first communication device obtains the L first PDUs. The sequence numbers of the L first PDUs may or may not be regular, and the first communication device may determine the sequence number of the first PDU only based on the third information. Based on this implementation, the first communication device can obtain the L first PDUs more flexibly.

Optionally, the third information may directly indicate the sequence number of the first PDU corresponding to the encoded packet. Based on this implementation, the second communication device may accurately determine the sequence number of the first PDU by obtaining only one encoded packet corresponding to the first PDU.

Optionally, the third information may indirectly indicate the sequence number of the first PDU corresponding to the encoded packet, and the second communication device needs to obtain a plurality of encoded packets corresponding to the first PDU to determine the sequence number of the first PDU. A specific implementation is: The first communication device encodes fourth information to generate second encoded information, where the fourth information indicates the sequence number of the first PDU corresponding to the encoded packet, a length of the fourth information is Q bits, a length of the second encoded information is P bits, $P \geq Q,$ and both P and Q are positive integers. The first PDU corresponds to M encoded packets, third information in the M encoded packets forms the second encoded information, M is a positive integer, and P is greater than or equal to M. For example, as shown in FIG. 4, the fourth information indicates the sequence number of the first PDU corresponding to the encoded packet. In FIG. 4, the length of the fourth information is 12 bits. The first communication device encodes the fourth information to generate 16-bit second encoded information. Then, the first communication device divides the 16-bit second encoded information into eight parts, where one part corresponds to 2-bit third information, and allocates eight pieces of third information to packet headers of eight encoded packets corresponding to the first PDU. Therefore, the packet header of each encoded packet includes 2-bit third information. To ensure that at least 2-bit third information can be allocated to the packet header of each encoded packet, if the length of the fourth information is Q bits, the quantity K of original data packets is required to be greater than or equal to Q. Compared with a manner in which a packet header of each encoded packet carries 12-bit fourth information, in this manner, header overheads of the encoded packet are reduced, and a total length of a plurality of pieces of third information obtained by the second communication device needs to be greater than the length of the fourth information, so that the second communication device can restore the second encoded information, to determine the sequence number of the first PDU. In other words, the second communication device needs to receive at least six encoded packets corresponding to the first PDU, in other words, obtain at least six pieces of third information from different encoded packets. A length of the six pieces of third information is 12 bits, and is equal to the length, namely, 12 bits, of the third information, so that the second encoded information can be restored, and the sequence number of the first PDU can be determined. This implementation helps reduce the packet header overheads of the encoded packet.

Further, optionally, the first communication device may encode the fourth information by using a linear block code (P, Q), to generate the second encoded information. In addition, the first communication device may alternatively encode the fourth information in another encoding manner. This is not limited in this embodiment of this application.

202: The first communication device performs cascading on each of N encoded packet groups to obtain N second PDUs, where the N encoded packet groups are obtained by dividing the S encoded packets, one encoded packet group includes one or more encoded packets, one second PDU corresponds to one encoded packet group and includes all encoded packets in the encoded packet group, and a PDU header of the second PDU carries a first sequence number and a bitmap.

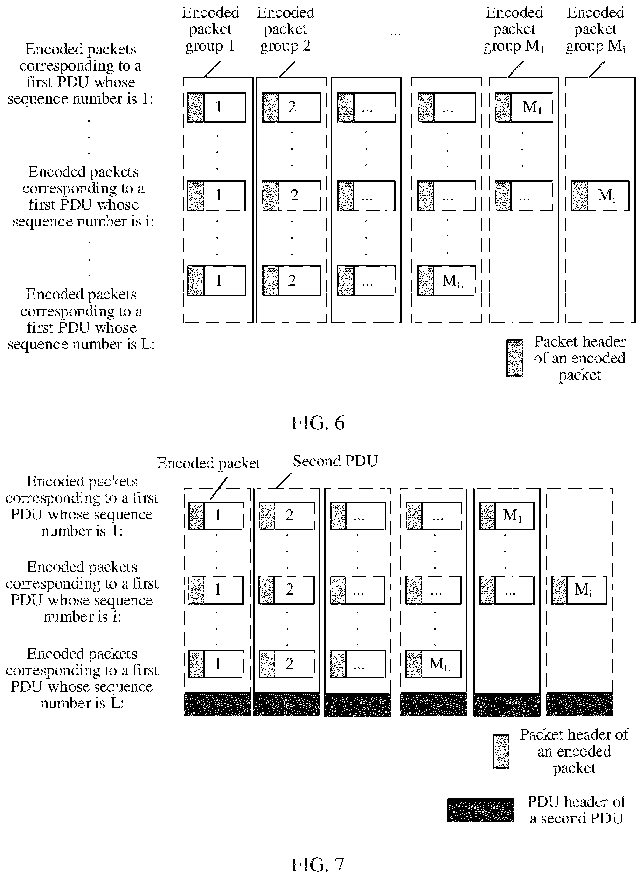

In this embodiment of this application, one encoded packet group includes one or more encoded packets, different encoded packet groups include different encoded packets, and any two encoded packets included in a same encoded packet group correspond to different first PDUs. One second PDU corresponds to one encoded packet group and includes all encoded packets in the encoded packet group. For example, as shown in FIG. 6, FIG. 6 includes the encoded packets corresponding to the L first PDUs and the N encoded packet groups. The sequence numbers of the L first PDUs are 1 to L, a quantity of encoded packets corresponding to a first PDU whose sequence number is i is $M_i$, and i is a positive integer not greater than L. In FIG. 6, groups of the encoded packets are determined based on sequence numbers of the encoded packets. For example, an encoded packet group 1 includes all encoded packets whose sequence numbers are 1 in the encoded packets corresponding to the first PDUs whose sequence numbers are 1 to L. In addition, the encoded packets may alternatively be grouped by using another method. FIG. 6 is merely an example provided in this application. This is not limited in this embodiment of this application.

In this embodiment of this application, the first sequence number is used to determine an encoded packet number corresponding to the encoded packet included in the second PDU. The second communication device may determine, based on first sequence numbers, sequence numbers of encoded packet groups corresponding to second PDUs, and sort the second PDUs, to restore the first PDU. Optionally, the first sequence number indicates the sequence number of the encoded packet group corresponding to the second PDU. The bitmap is used to enable the second communication device to determine a case of the encoded packet included in the second PDU, where the bitmap includes H bits, one bit corresponds to one first PDU, the bit indicates whether the second PDU includes an encoded packet in the first PDU corresponding to the bit, a quantity of encoded packets included in one second PDU is less than or equal to H, and H is a positive integer. For example, the bitmap includes eight bits, which correspond to eight first PDUs, and sequence numbers of the eight first PDUs are 1 to 8. In the bitmap, an $i^{th}$ bit represents an encoded packet corresponding to a first PDU whose sequence number is i, where i is a positive integer not greater than 8. If the bitmap is represented as 00000001, it indicates that the second PDU includes only an encoded packet whose sequence number is 8. If the bitmap is represented as 11111111, it indicates that the second PDU includes eight encoded packets corresponding to the eight first PDUs whose sequence numbers are 1 to 8. According to the method, the PDU header of the second PDU may carry some parameters of the packet header of the encoded packet, so that the header overheads of the encoded packet can be reduced.

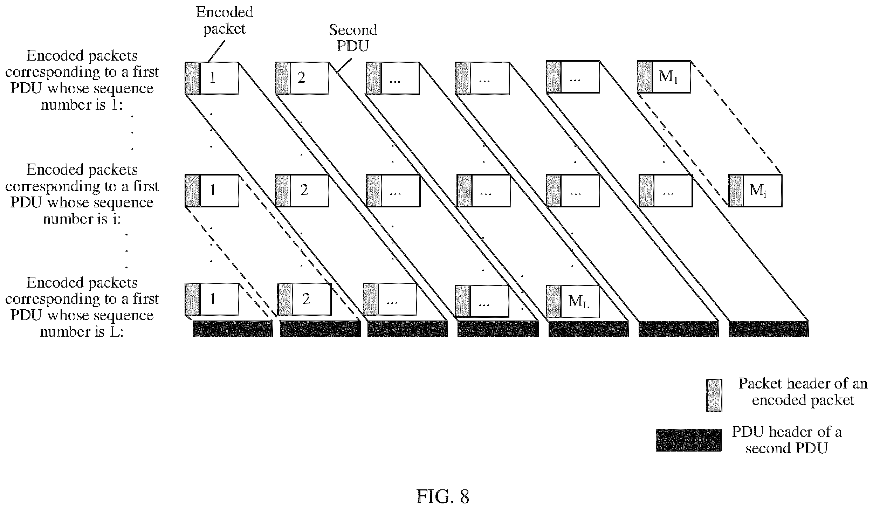

In a possible implementation, the first communication device may cascade all the encoded packets in the N encoded packet groups by using an $A \times N$ interleaver. A quantity of encoded packets included in one encoded packet group is not greater than A, a quantity of encoded packets corresponding to one first PDU is not greater than N, L is less than or equal to H, A is less than or equal to H, A is greater than or equal to L, and A is a positive integer greater than or equal to 1. For example, as shown in FIG. 7, FIG. 7 includes the encoded packets corresponding to the L first PDUs, the sequence numbers corresponding to the L first PDUs include 1 to L, and the encoded packets are sequentially arranged from top to bottom in a sequence of the sequence numbers of the first PDUs. An $i^{th}$ row corresponds to $M_i$ encoded packets of an $i^{th}$ first PDU, where i is a positive integer not greater than L. An interleaver used in FIG. 7 is a column interleaver (column interleaver), in other words, each column of encoded packets form one encoded packet group, and one encoded packet group corresponds to one second PDU. For another example, as shown in FIG. 8, a shape of the interleaver is not necessarily a rectangle. A difference between FIG. 8 and FIG. 7 lies in that an interleaver used in FIG. 8 is a diagonal interleaver (diagonal interleaver), and another part is the same as that in FIG. 7. Details are not described herein again. In addition to the foregoing two examples, the first communication device may alternatively cascade all the encoded packets in the N encoded packet groups by using another interleaver or interleaving method.

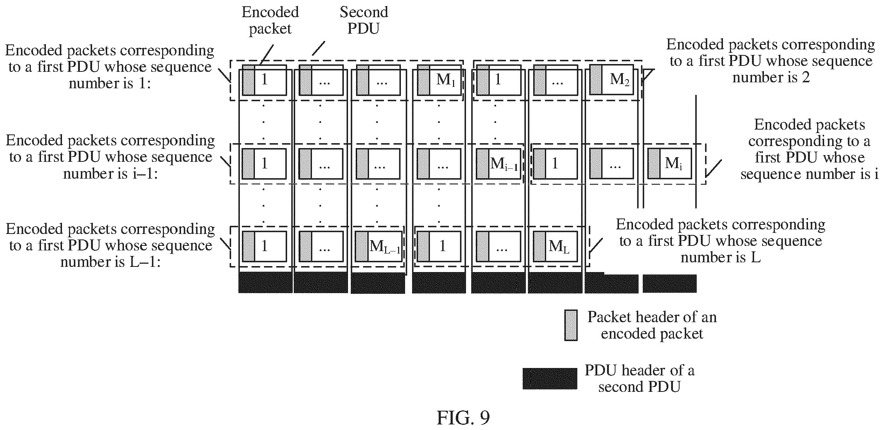

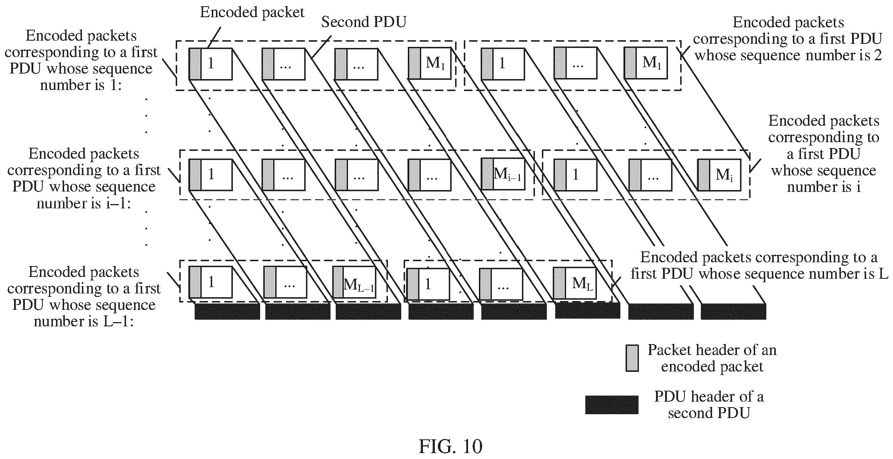

In a possible implementation, the first communication device may cascade all the encoded packets in the N encoded packet groups by using an $A \times N$ interleaver. A quantity of encoded packets included in one encoded packet group is not greater than A, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$, and both A and X are positive integers greater than 1. For example, as shown in FIG. 9, FIG. 9 includes the encoded packets corresponding to the L first PDUs, the sequence numbers corresponding to the L first PDUs include 1 to L, and the encoded packets are sequentially arranged from top to bottom in a sequence of the sequence numbers of the first PDUs. X represents a quantity of first PDUs corresponding to each row of encoded packets. For example, in FIG. 9, if X is equal to 2, it indicates that each row of encoded packets correspond to two first PDUs. An interleaver used in FIG. 9 is a column interleaver, in other words, each column of encoded packets form one encoded packet group, and one encoded packet group corresponds to one second PDU. For another example, as shown in FIG. 10, a shape of the interleaver is not necessarily a rectangle. A difference between FIG. 9 and FIG. 10 lies in that an interleaver used in FIG. 10 is a diagonal interleaver, and another part is the same as that in FIG. 9. Details are not described herein again. In addition to the foregoing two examples, the first communication device may alternatively cascade all the encoded packets in the N encoded packet groups by using another interleaver or interleaving method.

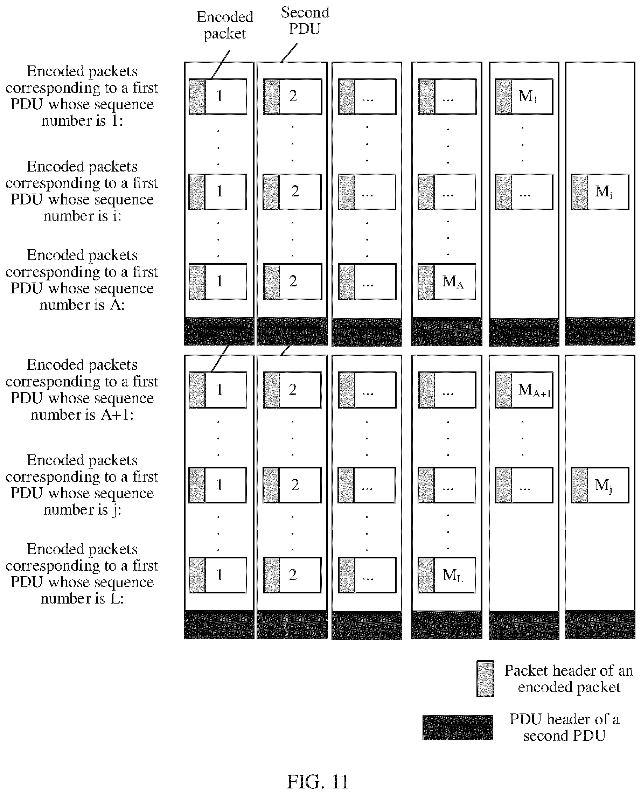

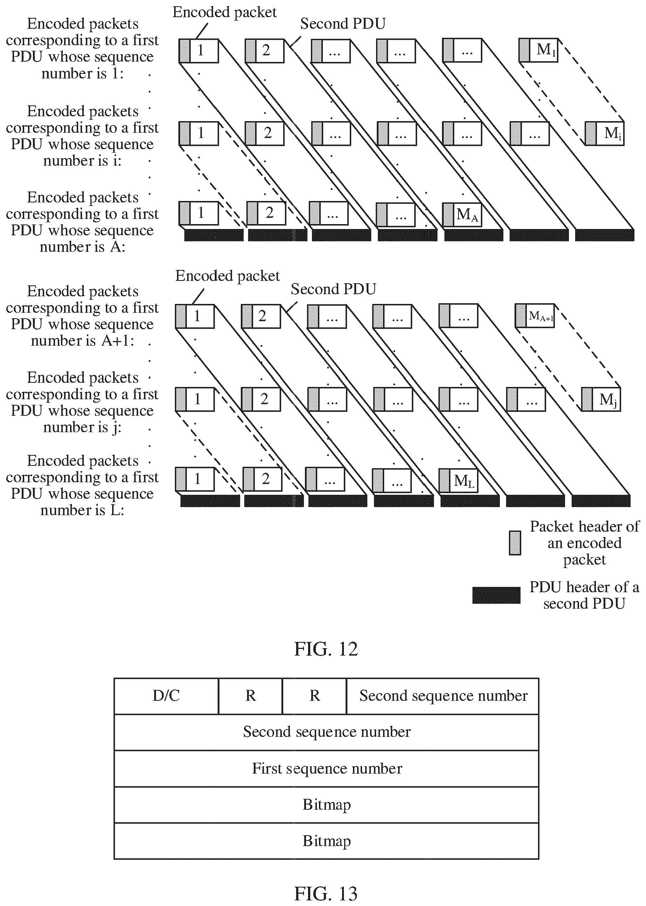

In a possible implementation, the first communication device may cascade all the encoded packets in the N encoded packet groups by using an $A \times B$ interleaver. A quantity of encoded packets included in one encoded packet group is not greater than A, a quantity of encoded packets corresponding to one first PDU is not greater than B, A is less than or equal to L, A is less than or equal to H, $N = Y \times B$, $Y = \lceil L \div A \rceil$, and both A and Y are positive integers greater than 1. For example, as shown in FIG. 11, FIG. 11 includes the encoded packets corresponding to the L first PDUs, the sequence numbers corresponding to the L first PDUs include 1 to L, and the encoded packets are sequentially arranged from top to bottom in a sequence of the sequence numbers of the first PDUs. Y represents that the L first PDUs need to be interleaved for Y times by using an interleaver. For example, in FIG. 11, if Y is 2, it indicates that the interleaver needs to perform interleaving twice. The first interleaving is performed on encoded packets corresponding to first PDUs whose sequence numbers are 1 to A, and the second interleaving is performed on encoded packets corresponding to first PDUs whose sequence numbers are A+1 to L. Therefore, 2*B second PDUs are finally generated. The interleaver used in FIG. 11 is a column interleaver, in other words, each column of encoded packets form one encoded packet group, and one encoded packet group corresponds to one second PDU. For another example, as shown in FIG. 12, a shape of the interleaver is not necessarily a rectangle. A difference between FIG. 11 and FIG. 12 lies in that an interleaver used in FIG. 12 is a diagonal interleaver, and another part is the same as that in FIG. 11. Details are not described herein again. In addition to the foregoing two examples, the first communication device may alternatively cascade all the encoded packets in the N encoded packet groups by using another interleaver or interleaving method.

In a possible implementation, the PDU header of the second PDU carries a second sequence number, and the second sequence number is used to determine a sequence number of a first PDU corresponding to the encoded packet included in the second PDU. In this case, the packet header of the encoded packet does not need to carry the third information. The sequence numbers of the L first PDUs obtained by the first communication device are required to be consecutive or inconsecutive but regular. The second sequence number may be a largest or a smallest sequence number in the sequence numbers of the L first PDUs, or may be a sequence number of any first PDU. However, an offset value of the sequence number that is of each first PDU and that corresponds to the second sequence number needs to be predefined, so that the second communication device can determine, based on the second sequence number, the sequence number of the first PDU corresponding to the encoded packet included in the second PDU. Based on this implementation, the packet header of the encoded packet does not need to include the sequence number of the first PDU, and the sequence number of the first PDU may be carried by using the PDU header of the second PDU, to reduce the header overheads of the encoded packet.

For example, FIG. 13 is a diagram of a structure of a PDU header of a second PDU according to an embodiment of this application. The PDU header of the second PDU includes five bytes, and the first byte includes a D/C field, R fields, and a second sequence number. A length of the D/C field is 1 bit, and the D/C field indicates whether an encoded packet included in the second PDU is a control packet. If the field is D, the encoded packet is not the control packet. If the field is C, the encoded packet is the control packet. The two R fields are reserved fields, and a total length is 3 bits. 4 bits in the first byte and the second byte are used to represent a second sequence number, and the second sequence number is used to determine a sequence number of a first PDU corresponding to the encoded packet included in the second PDU. The third byte represents a first sequence number, and the first sequence number is used to determine an encoded packet number corresponding to the encoded packet included in the second PDU. The fourth byte and the fifth byte represent a bitmap. The bitmap includes 16 bits, one bit corresponds to one first PDU, and the bit indicates whether the second PDU includes an encoded packet in the first PDU corresponding to the bit. FIG. 13 is merely a diagram of a structure of a PDU header of a second PDU according to an embodiment of this application. The structure of the PDU header of the second PDU may alternatively be in another form. The structure of the PDU header of the second PDU is not limited in this embodiment of this application.

203: The first communication device outputs the N second PDUs.

In this embodiment of this application, that the first communication device outputs the N second PDUs may be specifically that the first communication device transmits the N second PDUs to a third protocol layer for processing, where the third protocol layer is a lower-layer protocol layer of the second protocol layer. For example, if the second protocol layer is the RLC layer, the first communication device transmits the N second PDUs to the MAC layer for processing.

204: The first communication device sends a target data packet to the second communication device. Correspondingly, the second communication device receives the target data packet sent by the first communication device.

In this embodiment of this application, the first communication device sends one or more target data packets to the second communication device, where the target data packet is generated based on the N second PDUs. The second communication device receives the target data packet sent by the first communication device. Because of instability of data transmission, the second communication device may be able to receive only some target data packets sent by the first communication device.

205: The second communication device obtains G second PDUs.

In this embodiment of this application, the second PDU is a PDU that is output from the third protocol layer and that is received by the second communication device through the second protocol layer. One second PDU corresponds to one encoded packet group and includes all encoded packets in the encoded packet group. One encoded packet group includes one or more encoded packets, different encoded packet groups include different encoded packets, and any two encoded packets included in a same encoded packet group correspond to different first PDUs. A PDU header of the second PDU carries a first sequence number and a bitmap. For a parameter carried in the PDU header of the second PDU, refer to the descriptions in step 202. Details are not described in this embodiment of this application. Because of instability of data transmission, the first communication device outputs the N second PDUs, but the second communication device may not obtain all the second PDUs output by the first communication device. The second communication device may obtain only the G second PDUs in the N second PDUs, where G is less than or equal to N.

206: The second communication device segments the G second PDUs to obtain F encoded packets.

In a possible implementation, a specific implementation in which the second communication device segments the G second PDUs to obtain the F encoded packets is: The second communication device segments the G second PDUs based on a preset length of a data packet to obtain the F encoded packets, where a length of one encoded packet is the preset length of the data packet. Because the first communication device segments, into K original data packets based on the preset length of the data packet, a target first PDU to which an indication field and a padding field are added, a length of one original data packet is equal to the preset length of the data packet, and the length of the encoded packet is the same as the length of the original data packet, the second communication device can accurately segment the second PDU based on the preset length of the data packet to obtain the encoded packet.

207: The second communication device restores one or more first PDUs based on first sequence numbers and bitmaps that are carried in PDU headers of the G second PDUs.

In this embodiment of this application, the PDU header of the second PDU carries the first sequence number and the bitmap, and the first sequence number is used to determine an encoded packet number corresponding to the encoded packet included in the second PDU. The second communication device may determine, based on the first sequence numbers carried in the PDU headers of the second PDUs, a location sequence of the encoded packets corresponding to the second PDUs, to sequentially arrange G encoded packets. The bitmap is used to enable the second communication device to determine a case of the encoded packet included in the second PDU, where the bitmap includes H bits, one bit corresponds to one first PDU, the bit indicates whether the second PDU includes an encoded packet in the first PDU corresponding to the bit, a quantity of encoded packets included in one second PDU is less than or equal to H, and H is a positive integer. Based on this implementation, a parameter in the packet header of the encoded packet may be carried by using the PDU header of the second PDU, to help reduce the packet header overheads of the encoded packet.

In a possible implementation, a specific implementation in which the second communication device restores the one or more first PDUs may be: restoring the one or more first PDUs by using the A×N interleaver. The type of the interleaver may be the column interleaver or the diagonal interleaver. This is not limited in this embodiment of this application. A quantity of encoded packets included in one encoded packet group is not greater than A, a quantity of encoded packets corresponding to one first PDU is not greater than N, L is less than or equal to H, A is less than or equal to H, A is greater than or equal to L, and A is a positive integer greater than or equal to 1. For example, as shown in FIG. 7 and FIG. 8, the type of the interleaver in FIG. 7 is the column interleaver, and the type of the interleaver in FIG. 8 is the diagonal interleaver. The type of the interleaver is not limited in this embodiment of this application. The second communication device sequentially arranges encoded packets from left to right based on the first sequence numbers carried in the PDU headers of the second PDUs, and determines a specific location of each encoded packet based on a correspondence between a bitmap and a location of the encoded packet. In addition to the foregoing two examples, the second communication device may alternatively restore the first PDU by using another interleaver or interleaving method.

In a possible implementation, optionally, a specific implementation in which the second communication device restores the one or more first PDUs may be: restoring the one or more first PDUs by using the A×N interleaver. A quantity of encoded packets included in one encoded packet group is not greater than A, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$, and both A and X are positive integers greater than 1. For example, as shown in FIG. 9 and FIG. 10, the type of the interleaver in FIG. 9 is the column interleaver, and the type of the interleaver in FIG. 10 is the diagonal interleaver. The type of the interleaver is not limited in this embodiment of this application. The second communication device sequentially arranges encoded packets from left to right based on the first sequence numbers carried in the PDU headers of the second PDUs, and determines a specific location of each encoded packet based on a correspondence between a bitmap and a location of the encoded packet. In addition to the foregoing two examples, the second communication device may alternatively restore the first PDU by using another interleaver or interleaving method.

In a possible implementation, a specific implementation in which the second communication device restores the one or more first PDUs may be: restoring the one or more first PDUs by using the A×B interleaver. The type of the interleaver may be the column interleaver or the diagonal interleaver. This is not limited in this embodiment of this application. A quantity of encoded packets included in one encoded packet group is not greater than A, a quantity of encoded packets corresponding to one first PDU is not greater than B, A is less than or equal to L, A is less than or equal to H, N=Y×B, $Y = \lceil L \div A \rceil$, and both A and Y are positive integers greater than 1. For example, as shown in FIG. 11 and FIG. 12, the type of the interleaver in FIG. 11 is the column interleaver, and the type of the interleaver in FIG. 12 is the diagonal interleaver. The type of the interleaver is not limited in this embodiment of this application. The second communication device sequentially arranges encoded packets from left to right based on the first sequence numbers carried in the PDU headers of the second PDUs, and determines a specific location of each encoded packet based on a correspondence between a bitmap and a location of the encoded packet. In addition to the foregoing two examples, the second communication device may alternatively restore the first PDU by using another interleaver or interleaving method.

It should be noted that an interleaver or an interleaving method used by the second communication device and an interleaver or an interleaving method used by the first communication device are pre-determined, and are the same.

In a possible implementation, a specific implementation in which the second communication device restores the one or more first PDUs is: The second communication device determines a quantity of original data packets of a target first PDU based on first information carried in a packet header of an encoded packet corresponding to the target first PDU; and if in the F encoded packets, a quantity V of encoded packets corresponding to the target first PDU is greater than or equal to the quantity of original data packets of the target first PDU, the second communication device restores the target first PDU based on the V encoded packets corresponding to the target first PDU, where a total quantity of encoded packets corresponding to the target first PDU is M, V is less than or equal to M, and V is a positive integer. Because of instability of data transmission, the first communication device outputs the N second PDUs, but the second communication device may not obtain all the second PDUs sent by the first communication device. Therefore, the quantity V of encoded packets of the target first PDU that are obtained by the second communication device may be less than the quantity of original data packets of the target first PDU, or may be greater than or equal to the quantity of original data packets of the target first PDU. If the quantity V of obtained encoded packets of the target first PDU is greater than or equal to the quantity of original data packets of the target first PDU, the second communication device may restore the target first PDU. If the quantity V of obtained encoded packets of the target first PDU is less than the quantity of original data packets of the target first PDU, the second communication device cannot restore the target first PDU. Based on this implementation, data transmission efficiency can be improved without reducing data transmission reliability.

Optionally, the first information may directly indicate the quantity of original data packets of the first PDU. Based on this implementation, the second communication device may accurately determine the quantity of original data packets of the first PDU by obtaining only one encoded packet corresponding to the first PDU.

Optionally, the first information indirectly indicates the quantity of original data packets of the first PDU. The second communication device needs to obtain a plurality of encoded packets corresponding to the first PDU to determine the quantity of original data packets of the first PDU. A specific implementation in which the second communication device determines the quantity of original data packets of the target first PDU based on the first information carried in the packet header of the encoded packet corresponding to the target first PDU is: The second communication device restores first encoded information based on first information carried in packet headers of the V encoded packet corresponding to the target first PDU, where the first encoded information is generated by encoding second information, the second information indicates the quantity of original data packets of the target first PDU, a length of the second information is W bits, a length of the first information is R bits, $R \times V \geq W$, and both W and R are positive integers. The second communication device determines the quantity of original data packets of the target first PDU based on the second information corresponding to the first encoded information. For example, a length of the first encoded information is 7 bits, the first encoded information is generated by the first communication device by encoding the second information, and the length of the second information is 4 bits. The first communication device divides the 7-bit first encoded information into seven parts, where one part corresponds to 1-bit first information, and allocates seven pieces of first information to packet headers of seven encoded packets corresponding to the first PDU. Therefore, the packet header of each encoded packet includes 1-bit first information. Compared with a manner in which a packet header of each encoded packet carries 4-bit second information, in this manner, header overheads of the encoded packet are reduced, and in this case, a total length of a plurality of pieces of first information obtained by the second communication device needs to be greater than the length of the second information, so that the second communication device can restore the first encoded information, to determine the quantity of original data packets of the first PDU. In other words, the second communication device needs to receive at least four encoded packets corresponding to the first PDU, in other words, obtain at least four pieces of different first information. A length of the four pieces of first information is 4 bits, and is equal to the length, namely, 4 bits, of the second information, so that the first encoded information can be restored, and the quantity of original data packets of the first PDU can be determined. This implementation helps reduce the packet header overheads of the encoded packet.

In a possible implementation, the PDU header of the second PDU carries a second sequence number, and the second sequence number is used to determine a sequence number of a first PDU corresponding to the encoded packet included in the second PDU. Second sequence numbers of the G second PDUs obtained by the second communication device are all the same. It should be noted that the second communication device obtains a plurality of second PDUs. In the plurality of second PDUs, first PDUs corresponding to some second PDUs are the same, and first PDUs corresponding to some second PDUs are different. A reason is that the second communication device may cascade encoded packets for a plurality of times. For example, the first cascading is performed on encoded packets corresponding to first PDUs with sequence numbers 1 to 8, and the second cascading is performed on encoded packets corresponding to first PDUs with sequence numbers 9 to 16. In the plurality of second PDUs obtained by the second communication device, some second PDUs may correspond to the first PDUs with the sequences 1 to 8, and some second PDUs may correspond to the first PDUs with the sequences 9 to 16. The second communication device may determine, based on the second sequence numbers, to classify the second PDUs, and groups second PDUs obtained by performing a same time of cascading, to restore the first PDU. Based on this implementation, the first PDU can be restored more accurately.

In another possible implementation, the packet header of the encoded packet corresponding to the target first PDU further includes third information, and the third information is used to determine a sequence number of the target first PDU.

Optionally, the third information may directly indicate the sequence number of the first PDU corresponding to the encoded packet. Based on this implementation, the second communication device may accurately determine the sequence number of the first PDU by obtaining only one encoded packet corresponding to the first PDU.

Optionally, the third information may indirectly indicate the sequence number of the first PDU corresponding to the encoded packet, and the second communication device needs to obtain a plurality of encoded packets corresponding to the first PDU to determine the sequence number of the first PDU. A specific implementation is: The second communication device restores second encoded information based on third information carried in packet headers of V encoded packets corresponding to the target first PDU, where a length of fourth information is Q bits, the second encoded information is generated by encoding the fourth information, the fourth information indicates the sequence number of the target first PDU, a length of the third information is U bits, $U \times V \geq Q$, and both Q and U are positive integers and greater than 1; and determines the sequence number of the target first PDU based on the fourth information corresponding to the second encoded information. For example, a length of the second encoded information is 16 bits, the second encoded information is generated after the first communication device encodes the fourth information, and the length of the fourth information is 12 bits. Then, the first communication device divides the 16-bit second encoded information into eight parts, where one part corresponds to 2-bit third information, and allocates eight pieces of third information to packet headers of eight encoded packets corresponding to the first PDU. Therefore, the packet header of each encoded packet includes 2-bit third information. Compared with a manner in which a packet header of each encoded packet carries 12-bit fourth information, in this manner, header overheads of the encoded packet are reduced, and in this case, a total length of a plurality of pieces of third information obtained by the second communication device needs to be greater than the length of the fourth information, so that the second communication device can restore the second encoded information, to determine the sequence number of the target first PDU. In other words, the second communication device needs to receive at least six encoded packets corresponding to the first PDU, in other words, obtain at least six pieces of third information from different encoded packets. A length of the six pieces of third information is 12 bits, and is equal to the length, namely, 12 bits, of the third information, so that the second encoded information can be restored, and the sequence number of the first PDU can be determined. This implementation helps reduce the packet header overheads of the encoded packet.

In a possible implementation, a specific implementation in which after the second communication device determines that the quantity of encoded packets corresponding to the target first PDU is greater than or equal to the quantity of original data packets corresponding to the target first PDU, the second communication device restores the target first PDU based on the V encoded packets corresponding to the target first PDU may be: The second communication device first performs decoding based on the V encoded packets, to obtain K original data packets corresponding to the target first PDU. Then, according to a predefined padding rule, the second communication device determines a location of the indication field and reads a length of the padding field indicated by the indication field. Finally, the second communication device removes the indication fields and the padding fields from the K original data packets, and cascades, in a sequence of numbers, the K original data packets from which the indication field and the padding field are removed, to restore the target first PDU.

The following uses an actual example to reflect beneficial effects described in this application. The first communication device obtains all encoded packets corresponding to 16 first PDUs, where a quantity of encoded packets corresponding to one first PDU is not greater than 16, a packet header of the encoded packet carries only a value indicating a quantity K of original data packets of the first PDU, and a length of the packet header of the encoded packet is 1 byte. The first communication device performs cascading on each of 16 encoded packet groups by using a $16 \times 16$ interleaver, to obtain 16 second PDUs. A structure of a PDU header of the second PDU is shown in FIG. 13, and a length of the PDU header is 5 bytes. A length of one first PDU is 1,500 bytes. Table 3 shows header overheads of an encoded packet in the method provided in this application. Compared with Table 1, in this table, it can be learned that the header overheads of the encoded packet can be reduced by using the method provided in this application. It is assumed that the third protocol layer is the RLC layer, and a new RLC PDU header is added to a second PDU when the second PDU is transmitted to the RLC layer. A length of the PDU header of an RLC PDU is usually 0 to 5 bytes. Table 4 shows a payload proportion of the RLC PDU obtained by using the method provided in this application. Compared with Table 2, in this table, the payload proportion of the RLC PDU can also be increased based on the method described in this application.

**Table 3**

| Quantity (namely, K) of original data packets | Length of the second PDU | Header overhead proportion |
|---|---|---|
| K=2 | $750 \text{ bytes}+1 \text{ byte}+\dfrac{5}{16} \text{ bytes}$ | 0.18% |
| K=4 | $375 \text{ bytes}+1 \text{ byte}+\dfrac{5}{16} \text{ bytes}$ | 0.35% |
| K=8 | $150 \text{ bytes}+1 \text{ byte}+\dfrac{5}{16} \text{ bytes}$ | 0.88% |
| K=12 | $125 \text{ bytes}+1 \text{ byte}+\dfrac{5}{16} \text{ bytes}$ | 1.10% |

**Table 4**

| Quantity (namely, K) of original data packets | RLC PDU composition | Payload proportion |
|---|---|---|
| K=2 | $750 \text{ bytes}+\dfrac{21}{16} \text{ bytes}+(0 \text{ to } \dfrac{5}{16}) \text{ bytes}$ | 99.78% to 99.83% |
| K=4 | $375 \text{ bytes}+\dfrac{21}{16} \text{ bytes}+(0 \text{ to } \dfrac{5}{16}) \text{ bytes}$ | 99.57% to 99.65% |
| K=8 | $150 \text{ bytes}+\dfrac{21}{16} \text{ bytes}+(0 \text{ to } \dfrac{5}{16}) \text{ bytes}$ | 98.92% to 99.13% |
| K=12 | $125 \text{ bytes}+\dfrac{21}{16} \text{ bytes}+(0 \text{ to } \dfrac{5}{16}) \text{ bytes}$ | 98.70% to 98.95% |

To implement functions in the foregoing method provided in embodiments of this application, both the first communication device and the second communication device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

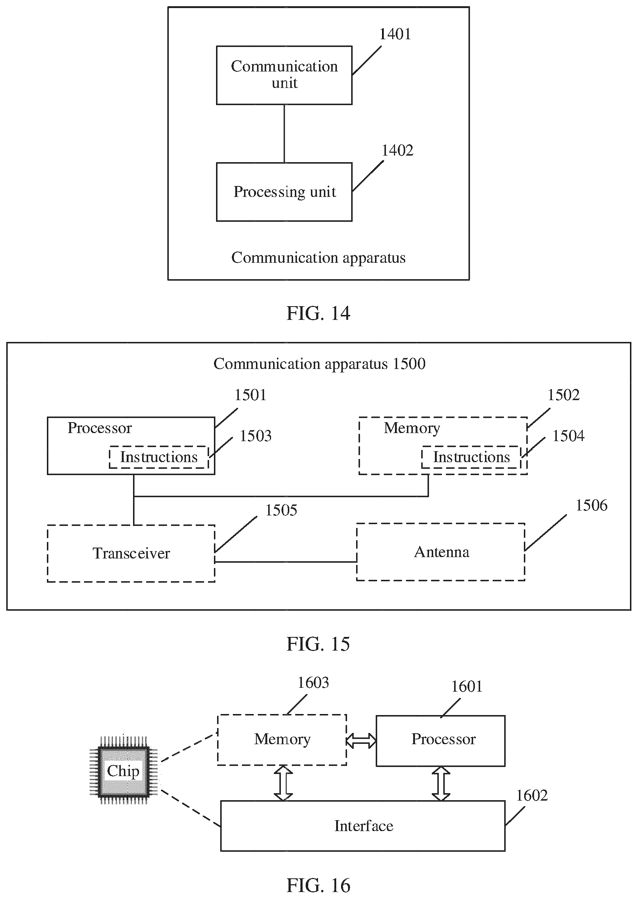

FIG. 14 is a diagram of a structure of a communication apparatus according to an embodiment of this application. The communication apparatus may be a first communication device or a second communication device, an apparatus in the first communication device or the second communication device, or an apparatus that can be used together with the first communication device or the second communication device. In a possible implementation, the communication apparatus may include modules or units that are in one-to-one correspondence with the methods/operations/steps/actions performed by the first communication device or the second communication device in the foregoing method embodiments. The unit may be implemented by a hardware circuit, software, or a combination of the hardware circuit and the software.

In a possible implementation, the apparatus may be the first communication device, the apparatus in the first communication device, or the apparatus that can be used together with the first communication device. The communication apparatus may alternatively be a chip system.

The communication apparatus shown in FIG. 14 may be the first communication device, the apparatus in the first communication device, or the apparatus that can be used together with the first communication device. The communication apparatus may alternatively be a chip system. The apparatus may be configured to perform some or all functions of the first communication device in the method embodiment described in FIG. 2. The communication apparatus shown in FIG. 14 may include a communication unit 1401 and a processing unit 1402. The processing unit 1402 is configured to process data. A receiving unit and a sending unit are integrated into the communication unit 1401. The communication unit 1401 may also be referred to as a transceiver unit. Alternatively, the communication unit 1401 may be split into a receiving unit and a sending unit. The same applies to the processing unit 1402 and the communication unit 1401 below. Details are not described below.

The communication unit 1401 is configured to obtain S encoded packets corresponding to L first protocol data units PDUs, where one first PDU corresponds to one or more encoded packets, L is a positive integer, and S is a positive integer. The processing unit 1402 is configured to perform cascading on each of N encoded packet groups to obtain N second PDUs, where the N encoded packet groups are obtained by dividing the S encoded packets, one encoded packet group includes one or more encoded packets, different encoded packet groups include different encoded packets, and any two encoded packets included in a same encoded packet group correspond to different first PDUs; one second PDU corresponds to one encoded packet group and includes all encoded packets in the encoded packet group; and a PDU header of the second PDU carries a first sequence number and a bitmap, the first sequence number is used to determine an encoded packet number corresponding to the encoded packet included in the second PDU, the bitmap includes H bits, one bit corresponds to one first PDU, the bit indicates whether the second PDU includes an encoded packet in the first PDU corresponding to the bit, a quantity of encoded packets included in one second PDU is less than or equal to H, and H is a positive integer. The communication unit 1401 is further configured to output the N second PDUs.

In a possible implementation, a quantity of encoded packets included in one encoded packet group is not greater than A, a quantity of encoded packets corresponding to one first PDU is not greater than N, L is less than or equal to H, A is less than or equal to H, A is greater than or equal to L, and A is a positive integer greater than or equal to 1.

In a possible implementation, a quantity of encoded packets included in one encoded packet group is not greater than A, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$, and both A and X are positive integers greater than 1.

In a possible implementation, a quantity of encoded packets included in one encoded packet group is not greater than A, a quantity of encoded packets corresponding to one first PDU is not greater than B, A is less than or equal to L, A is less than or equal to H, N=Y×B, $Y = \lceil L \div A \rceil$, and both A and Y are positive integers greater than 1.

In a possible implementation, a packet header of the encoded packet includes first information, and the first information is used to determine a quantity of original data packets of the first PDU corresponding to the encoded packet.

In a possible implementation, the processing unit 1402 is further configured to encode second information to generate first encoded information, where the second information indicates the quantity of original data packets of the first PDU, a length of the second information is W bits, a length of the first encoded information is E bits, $E \geq W$, and both W and E are positive integers. The first PDU corresponds to M encoded packets, first information in the M encoded packets forms the first encoded information, M is a positive integer, and E is greater than or equal to M.

In a possible implementation, the PDU header of the second PDU carries a second sequence number, and the second sequence number is used to determine a sequence number of a first PDU corresponding to the encoded packet included in the second PDU.

In a possible implementation, the packet header of the encoded packet further carries third information, and the third information is used to determine a sequence number of the first PDU corresponding to the encoded packet.

In a possible implementation, the processing unit 1402 is further configured to encode fourth information to generate second encoded information, where the fourth information indicates the sequence number of the first PDU corresponding to the encoded packet, a length of the fourth information is Q bits, a length of the second encoded information is P bits, $P \geq Q$, and both P and Q are positive integers. The first PDU corresponds to M encoded packets, third information in the M encoded packets forms the second encoded information, M is a positive integer, and P is greater than or equal to M.

For another possible implementation of the communication apparatus, refer to related descriptions of the function of the first communication device in the method embodiment corresponding to FIG. 2. Details are not described herein again.

In another possible implementation, the communication apparatus shown in FIG. 14 may be the second communication device, the apparatus in the second communication device, or the apparatus that can be used together with the second communication device. The communication apparatus may alternatively be a chip system. The apparatus may be configured to perform some or all functions of the second communication device in the method embodiment described in FIG. 2. The communication apparatus shown in FIG. 14 may include a communication unit 1401 and a processing unit 1402.

The communication unit 1401 is configured to obtain G second protocol data units PDUs, where one second PDU corresponds to one encoded packet group and includes all encoded packets in the encoded packet group; one encoded packet group includes one or more encoded packets, different encoded packet groups include different encoded packets, and any two encoded packets included in a same encoded packet group correspond to different first PDUs; and a PDU header of the second PDU carries a first sequence number and a bitmap, the first sequence number is used to determine an encoded packet number corresponding to the encoded packet included in the second PDU, the bitmap includes H bits, one bit corresponds to one first PDU, the bit indicates whether the second PDU includes an encoded packet in the first PDU corresponding to the bit, a quantity of encoded packets included in one second PDU is less than or equal to H, and H is a positive integer. The processing unit 1402 is configured to segment the G second PDUs to obtain F encoded packets, where F is a positive integer. The processing unit 1402 is further configured to restore one or more first PDUs based on first sequence numbers and bitmaps that are carried in PDU headers of the G second PDUs.

In a possible implementation, a quantity of encoded packets included in one encoded packet group is not greater than A, a quantity of encoded packets corresponding to one first PDU is not greater than N, the G second PDUs correspond to L first PDUs, L is less than or equal to H, A is less than or equal to H, A is greater than or equal to L, and L and A are positive integers greater than 1.

In a possible implementation, a quantity of encoded packets included in one encoded packet group is not greater than A, the G second PDUs correspond to L first PDUs, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$, and L, A, and X are all positive integers greater than 1.

In a possible implementation, a quantity of encoded packets included in one encoded packet group is not greater than A, a quantity of encoded packets corresponding to one first PDU is not greater than B, the G second PDUs correspond to L first PDUs, A is less than or equal to L, A is less than or equal to H, N=Y×B, $Y = \lceil L \div A \rceil$, and A, L, and Y are all positive integers greater than 1.

In a possible implementation, when the processing unit 1402 restores the one or more first PDUs, the processing unit 1402 is specifically configured to: determine a quantity of original data packets of a target first PDU based on first information carried in a packet header of an encoded packet corresponding to the target first PDU; and if in the F encoded packets, a quantity V of encoded packets corresponding to the target first PDU is greater than or equal to the quantity of original data packets of the target first PDU, restore the target first PDU based on the V encoded packets corresponding to the target first PDU, where a total quantity of encoded packets corresponding to the target first PDU is M, V is less than or equal to M, and V is a positive integer.

In a possible implementation, the processing unit 1402 determines the quantity of original data packets of the target first PDU based on the first information carried in the packet header of the encoded packet corresponding to the target first PDU, and the processing unit 1402 is specifically configured to: restore first encoded information based on first information carried in packet headers of the V encoded packet corresponding to the target first PDU, where the first encoded information is generated by encoding second information, the second information indicates the quantity of original data packets of the target first PDU, a length of the second information is W bits, a length of the first information is R bits, $R \times V \geq W$, and both W and R are positive integers; and determine the quantity of original data packets of the target first PDU based on the second information corresponding to the first encoded information.

In a possible implementation, the PDU header of the second PDU carries a second sequence number, and the second sequence number is used to determine a sequence number of a first PDU corresponding to the encoded packet included in the second PDU.

In a possible implementation, the packet header of the encoded packet corresponding to the target first PDU further includes third information, and the third information is used to determine a sequence number of the target first PDU.

In a possible implementation, the processing unit 1402 is further configured to: restore second encoded information based on third information carried in the packet headers of the V encoded packets corresponding to the target first PDU, where a length of fourth information is Q bits, the second encoded information is generated by encoding the fourth information, the fourth information indicates the sequence number of the target first PDU, a length of the third information is U bits, $U \times V \geq Q$, and both Q and U are positive integers and greater than 1; and determine the sequence number of the target first PDU based on the fourth information corresponding to the second encoded information.

For another possible implementation of the communication apparatus, refer to related descriptions of the function of the second communication device in the method embodiment corresponding to FIG. 2. Details are not described herein again.

FIG. 15 is a diagram of a structure of a communication apparatus. The communication apparatus 1500 may be the first communication device in the foregoing method embodiments, or may be a chip, a chip system, a processor, or the like that supports the first communication device in implementing the foregoing method. The communication apparatus may be configured to implement the method described in the foregoing method embodiments. For details, refer to the descriptions in the foregoing method embodiments.

Alternatively, the communication apparatus 1500 may be the second communication device in the foregoing method embodiments, or may be a chip, a chip system, a processor, or the like that supports the second communication device in implementing the foregoing method. The communication apparatus may be configured to implement the method described in the foregoing method embodiments. For details, refer to the descriptions in the foregoing method embodiments.

The communication apparatus 1500 may include one or more processors 1501. The processor 1501 may be a general-purpose processor, a dedicated processor, or the like. For example, the processor 1501 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1500 may include one or more memories 1502. The memory may store instructions 1504, and the instructions may be run on the processor 1501, so that the communication apparatus 1500 performs the method described in the foregoing method embodiments. Optionally, the memory 1502 may further store data. The processor 1501 and the memory 1502 may be disposed separately, or may be integrated together.

Optionally, the communication apparatus 1500 may further include a transceiver 1505 and an antenna 1506. The transceiver 1505 may be referred to as a transceiver unit, a transceiver machine, a transceiver circuit, or the like, and is configured to implement a transceiver function. The transceiver 1505 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1500 is the first communication device. The processor 1501 is configured to perform a data processing operation of the first communication device in the foregoing method embodiments. The transceiver 1505 is configured to perform a data sending/receiving operation of the first communication device in the foregoing method embodiments.

Alternatively, the communication apparatus 1500 is the second communication device. The processor 1501 is configured to perform a data processing operation of the second communication device in the foregoing method embodiments. The transceiver 1505 is configured to perform a data sending/receiving operation of the second communication device in the foregoing method embodiments.

In another possible design, the processor 1501 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1501 may store instructions 1503. When the instructions 1503 are run on the processor 1501, the communication apparatus 1500 may be enabled to perform the method described in the foregoing method embodiments. The instructions 1503 may be fixed in the processor 1501. In this case, the processor 1501 may be implemented by hardware.

In still another possible design, the communication apparatus 1500 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like.

The communication apparatus described in the foregoing embodiment may be a terminal device, the first communication device, or the second communication device. A scope of the communication apparatus described in embodiments of this application is not limited thereto, and a structure of the communication apparatus may not be limited by FIG. 15. The communication apparatus may be an independent device or may be a part of a large device. For example, the communication apparatus may be:

(1) an independent integrated circuit IC, a chip, a chip system, or a subsystem;
(2) a set that has one or more ICs, where optionally, the IC set may alternatively include a storage component configured to store data and instructions;
(3) an ASIC, for example, a modem (Mobile Station Modem, MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device.

For a case in which the communication apparatus is the chip or the chip system, refer to a diagram of a structure of a chip shown in FIG. 16. The chip shown in FIG. 16 includes a processor 1601 and an interface 1602. Optionally, the chip may further include a memory 1603. There may be one or more processors 1601, and there may be a plurality of interfaces 1602.

In a design, when the chip is configured to implement the function of the terminal device in embodiments of this application,

the interface 1602 is configured to input or output a signal, and
the processor 1601 is configured to perform a data processing operation performed by the terminal device in the foregoing method embodiments.

In another design, when the chip is configured to implement the function of the network device in embodiments of this application,

the interface 1602 is configured to input or output a signal, and
the processor 1601 is configured to perform a data processing operation performed by the network device in the foregoing method embodiments.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.

It may be understood that the memory in embodiments of this application may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and method described in this specification is intended to include but is not limited to these memories and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In the foregoing embodiments, the descriptions of each embodiment have respective focuses. For a part that is not described in detail in an embodiment, refer to related descriptions in other embodiments.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the claims.

**Claims**

1.  A data encoding method, wherein the method comprises:

    obtaining (201) S encoded packets corresponding to L first protocol data units, PDUs, wherein one first PDU corresponds to one or more encoded packets, L is a positive integer, and S is a positive integer;
    performing (202) cascading on each of N encoded packet groups to obtain N second PDUs, wherein the N encoded packet groups are obtained by dividing the S encoded packets, one encoded packet group comprises one or more encoded packets, different encoded packet groups comprise different encoded packets, and any two encoded packets comprised in a same encoded packet group correspond to different first PDUs; one second PDU corresponds to one encoded packet group and comprises all encoded packets in the encoded packet group; and a PDU header of the second PDU carries a first sequence number and a bitmap, the first sequence number is used to determine an encoded packet number corresponding to the encoded packet comprised in the second PDU, the bitmap comprises H bits, one bit corresponds to one first PDU, the bit indicates whether the second PDU comprises an encoded packet in the first PDU corresponding to the bit, a quantity of encoded packets comprised in one second PDU is less than or equal to H, and H is a positive integer; and
    outputting (203) the N second PDUs.

2.  The method according to claim 1, wherein a quantity of encoded packets comprised in one encoded packet group is not greater than A, a quantity of encoded packets corresponding to one first PDU is not greater than N, L is less than or equal to H, A is less than or equal to H, A is greater than or equal to L, and A is a positive integer greater than or equal to 1.

3.  The method according to claim 1, wherein a quantity of encoded packets comprised in one encoded packet group is not greater than A, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$, and both A and X are positive integers greater than 1.

4.  The method according to claim 1, wherein a quantity of encoded packets comprised in one encoded packet group is not greater than A, a quantity of encoded packets corresponding to one first PDU is not greater than B, A is less than or equal to L, A is less than or equal to H, N=Y×B, $Y = \lceil L \div A \rceil$, and both A and Y are positive integers greater than 1.

5.  The method according to any one of claims 1 to 4, wherein a packet header of the encoded packet comprises first information, and the first information is used to determine a quantity of original data packets of the first PDU corresponding to the encoded packet.

6.  The method according to claim 5, wherein the method further comprises:

    encoding second information to generate first encoded information, wherein the second information indicates the quantity of original data packets of the first PDU, a length of the second information is W bits, a length of the first encoded information is E bits, $E \geq W$, and both W and E are positive integers; and
the first PDU corresponds to M encoded packets, first information in the M encoded packets forms the first encoded information, M is a positive integer, and E is greater than or equal to M.

7. A data decoding method, wherein the method comprises:

obtaining (205) G second protocol data units PDUs, wherein one second PDU corresponds to one encoded packet group and comprises all encoded packets in the encoded packet group; one encoded packet group comprises one or more encoded packets, different encoded packet groups comprise different encoded packets, and any two encoded packets comprised in a same encoded packet group correspond to different first PDUs; and a PDU header of the second PDU carries a first sequence number and a bitmap, the first sequence number is used to determine an encoded packet number corresponding to the encoded packet comprised in the second PDU, the bitmap comprises H bits, one bit corresponds to one first PDU, the bit indicates whether the second PDU comprises an encoded packet in the first PDU corresponding to the bit, a quantity of encoded packets comprised in one second PDU is less than or equal to H, and H is a positive integer;
segmenting (206) the G second PDUs to obtain F encoded packets, wherein F is a positive integer; and
restoring (207) one or more first PDUs based on first sequence numbers and bitmaps that are carried in PDU headers of the G second PDUs.

8. The method according to claim 7, wherein a quantity of encoded packets comprised in one encoded packet group is not greater than A, a quantity of encoded packets corresponding to one first PDU is not greater than N, the G second PDUs correspond to L first PDUs, L is less than or equal to H, A is less than or equal to H, A is greater than or equal to L, and L and A are positive integers greater than or equal to 1.

9. The method according to claim 7, wherein a quantity of encoded packets comprised in one encoded packet group is not greater than A, the G second PDUs correspond to L first PDUs, a total quantity of encoded packets corresponding to any X first PDUs in the L first PDUs is not greater than N, $\lceil L \div X \rceil$ is less than or equal to H, A is less than or equal to H, A is greater than or equal to $\lceil L \div X \rceil$, and L, A, and X are all positive integers greater than 1.

10. The method according to claim 7, wherein a quantity of encoded packets comprised in one encoded packet group is not greater than A, a quantity of encoded packets corresponding to one first PDU is not greater than B, the G second PDUs correspond to L first PDUs, A is less than or equal to L, A is less than or equal to H, N=Y×B, $Y = \lceil L \div A \rceil$, and A, L, and Y are all positive integers greater than 1.

11. The method according to any one of claims 7 to 10, wherein the restoring one or more first PDUs comprises:

determining a quantity of original data packets of a target first PDU based on first information carried in a packet header of an encoded packet corresponding to the target first PDU; and
if in the F encoded packets, a quantity V of encoded packets corresponding to the target first PDU is greater than or equal to the quantity of original data packets of the target first PDU, restoring the target first PDU based on the V encoded packets corresponding to the target first PDU, wherein a total quantity of encoded packets corresponding to the target first PDU is M, V is less than or equal to M, and V is a positive integer.

12. The method according to claim 11, wherein the determining a quantity of original data packets of a target first PDU based on first information carried in a packet header of an encoded packet corresponding to the target first PDU comprises:

restoring first encoded information based on first information carried in packet headers of the V encoded packet corresponding to the target first PDU, wherein the first encoded information is generated by encoding second information, the second information indicates the quantity of original data packets of the target first PDU, a length of the second information is W bits, a length of the first information is R bits, $R \times V \geq W$, and both W and R are positive integers; and
determining the quantity of original data packets of the target first PDU based on the second information corresponding to the first encoded information.

**13.** A communication apparatus, wherein the apparatus comprises a processor (1501) and a memory (1502); and the memory comprises a program instruction, which, when executed by the processor causes the processor to perform the method according to any one of claims 1 to 6, or the method according to any one of claims 7 to 12.

**14.** A computer-readable storage medium, comprising a computer instruction, which, when executed by a computer, causes the computer to perform the method according to any one of claims 1 to 6, or the method according to any one of claims 7 to 12.

**15.** A computer program product comprising instructions which, when the program is executed by a computer, causes the computer to perform the method according to any one of claims 1 to 6, or the method according to any one of claims 7 to 12.

**Patentansprüche**

**1.** Datencodierungsverfahren, wobei das Verfahren Folgendes umfasst:

Erlangen (201) von S codierten Paketen, die L ersten Protokolldateneinheiten (PDUen) entsprechen, wobei eine erste PDU einem oder mehreren codierten Paketen entspricht, L eine positive Ganzzahl ist und S eine positive Ganzzahl ist;
Durchführen (202) eines Kaskadierens an jeder von N codierten Paketgruppen, um N zweite PDUen zu erlangen, wobei die N codierten Paketgruppen durch Aufteilen der S codierten Pakete erlangt werden, eine codierte Paketgruppe ein oder mehrere codierte Pakete umfasst, unterschiedliche codierte Paketgruppen unterschiedliche codierte Pakete umfassen und zwei beliebige codierte Pakete, die von einer selben codierten Paketgruppe umfasst sind, unterschiedlichen ersten PDUen entsprechen; eine zweite PDU einer codierten Paketgruppe entspricht und alle codierten Pakete in der codierten Paketgruppe umfasst; und ein PDU-Header der zweiten PDU eine erste Sequenznummer und eine Bitmap trägt, die erste Sequenznummer verwendet wird, um eine codierte Paketnummer zu bestimmen, die dem von der zweiten PDU umfassten codierten Paket entspricht, die Bitmap H Bits umfasst, ein Bit einer ersten PDU entspricht, das Bit angibt, ob die zweite PDU ein codiertes Paket in der ersten PDU umfasst, das dem Bit entspricht, eine Anzahl von codierten Paketen, die von einer zweiten PDU umfasst sind, kleiner oder gleich H ist und H eine positive Ganzzahl ist; und
Ausgeben (203) der N zweiten PDUen.

**2.** Verfahren nach Anspruch 1, wobei eine Menge von codierten Paketen, die von einer Gruppe von codierten Paketen umfasst sind, nicht größer als A ist, eine Menge von codierten Paketen, die einer ersten PDU entsprechen, nicht größer als N ist, L kleiner oder gleich H ist, A kleiner oder gleich H ist, A größer oder gleich L ist und A eine positive Ganzzahl größer oder gleich 1 ist.

**3.** Verfahren nach Anspruch 1, wobei eine Menge von codierten Paketen, die von einer Gruppe von codierten Paketen umfasst sind, nicht größer als A ist, eine Gesamtmenge von codierten Paketen, die X beliebigen ersten PDUen in den ersten L PDUen entsprechen, nicht größer als N ist, $\lceil L \div X \rceil$ kleiner oder gleich H ist, A kleiner oder gleich H ist, A größer oder gleich $\lceil L \div X \rceil$ ist und sowohl A als auch X positive Ganzzahlen größer als 1 sind.

**4.** Verfahren nach Anspruch 1, wobei eine Menge von codierten Paketen, die von einer Gruppe von codierten Paketen umfasst sind, nicht größer als A ist, eine Menge von codierten Paketen, die einer ersten PDU entsprechen, nicht größer als B ist, A kleiner oder gleich L ist, A kleiner oder gleich H ist, $N = Y \times B$, $Y = \lceil L \div A \rceil$ und sowohl A als auch Y positive Ganzzahlen größer als 1 sind.

**5.** Verfahren nach einem der Ansprüche 1 bis 4, wobei ein Paket-Header des codierten Pakets erste Informationen umfasst und die ersten Informationen verwendet werden, um eine Menge von ursprünglichen Datenpaketen der ersten PDU zu bestimmen, die dem codierten Paket entsprechen.

**6.** Verfahren nach Anspruch 5, wobei das Verfahren ferner Folgendes umfasst:

Kodieren von zweiten Informationen, um erste kodierte Informationen zu erzeugen, wobei die zweiten Informationen die Menge von ursprünglichen Datenpaketen der ersten PDU angeben, eine Länge der zweiten Informationen W Bits ist, eine Länge der ersten kodierten Informationen E Bits ist, $E \geq W$ und sowohl W als auch E positive Ganzzahlen sind; und

die erste PDU M codierten Paketen entspricht, erste Informationen in den M codierten Paketen die ersten codierten Informationen bilden, M eine positive Ganzzahl ist und E größer oder gleich M ist.

7. Datendecodierungsverfahren, wobei das Verfahren Folgendes umfasst:

Erlangen (205) von G zweiten Protokolldateneinheiten (PDUen), wobei eine zweite PDU einer codierten Paketgruppe entspricht und alle codierten Pakete in der codierten Paketgruppe umfasst; eine codierte Paketgruppe ein oder mehrere codierte Pakete umfasst, unterschiedliche codierte Paketgruppen unterschiedliche codierte Pakete umfassen und zwei beliebige codierte Pakete, die von einer selben codierten Paketgruppe umfasst sind, unterschiedlichen ersten PDUen entsprechen; und ein PDU-Header der zweiten PDU eine erste Sequenznummer und eine Bitmap trägt, die erste Sequenznummer verwendet wird, um eine codierte Paketnummer zu bestimmen, die dem von der zweiten PDU umfassten codierten Paket entspricht, die Bitmap H Bits umfasst, ein Bit einer ersten PDU entspricht, das Bit angibt, ob die zweite PDU ein codiertes Paket in der ersten PDU umfasst, das dem Bit entspricht, eine Anzahl von codierten Paketen, die von einer zweiten PDU umfasst sind, kleiner oder gleich H ist und H eine positive Ganzzahl ist;
Segmentieren (206) der G zweiten PDUen, um F codierte Pakete zu erlangen, wobei F eine positive Ganzzahl ist; und
Wiederherstellen (207) von einer oder mehreren ersten PDUen basierend auf ersten Sequenznummern und Bitmaps, die in PDU-Headern der G zweiten PDUen getragen werden.

8. Verfahren nach Anspruch 7, wobei eine Menge von codierten Paketen, die von einer Gruppe von codierten Paketen umfasst sind, nicht größer als A ist, eine Menge von codierten Paketen, die einer ersten PDU entsprechen nicht größer als N ist, die G zweiten PDUen L ersten PDUen entsprechen, L kleiner oder gleich H ist, A kleiner oder gleich H ist, A größer oder gleich L ist und A und L positive Ganzzahlen größer oder gleich 1 sind.

9. Verfahren nach Anspruch 7, wobei eine Menge von codierten Paketen, die von einer Gruppe von codierten Paketen umfasst sind, nicht größer als A ist, die G zweiten PDUen den L ersten PDUen entsprechen, eine Gesamtmenge von codierten Paketen, die X beliebigen ersten PDUen in den L ersten PDUen entsprechen, nicht größer als N ist, $\lceil L \div X \rceil$ kleiner oder gleich H ist, A kleiner oder gleich H ist, A größer oder gleich $\lceil L \div X \rceil$ ist und L, A und X alle positive Ganzzahlen größer als 1 sind.

10. Verfahren nach Anspruch 7, wobei eine Menge von codierten Paketen, die von einer Gruppe von codierten Paketen umfasst sind, nicht größer als A ist, eine Menge von codierten Paketen, die einer ersten PDU entsprechen, nicht größer als B ist, die G zweiten PDUen L ersten PDUen entsprechen, A kleiner oder gleich L ist, A kleiner oder gleich H ist, $N = Y \times B$, $Y = \lceil L \div A \rceil$ und A, L und Y alle positive Ganzzahlen größer als 1 sind.

11. Verfahren nach einem der Ansprüche 7 bis 10, wobei das Wiederherstellen von einer oder mehreren ersten PDUen Folgendes umfasst:

Bestimmen einer Menge von ursprünglichen Datenpaketen einer ersten Ziel-PDU basierend auf ersten Informationen, die in einem Paket-Header eines codierten Pakets getragen werden, das der ersten Ziel-PDU entspricht; und,
wenn in den F codierten Paketen eine Menge V von codierten Paketen, die der ersten Ziel-PDU entsprechen, größer oder gleich der Menge von ursprünglichen Datenpaketen der ersten Ziel-PDU ist, Wiederherstellen der ersten Ziel-PDU basierend auf den V codierten Paketen, die der ersten Ziel-PDU entsprechen, wobei eine Gesamtmenge von codierten Paketen, die der ersten Ziel-PDU entsprechen, M ist, V kleiner oder gleich M ist und V eine positive Ganzzahl ist.

12. Verfahren nach Anspruch 11, wobei das Bestimmen einer Menge von ursprünglichen Datenpaketen einer ersten Ziel-PDU basierend auf ersten Informationen, die in einem Paket-Header eines codierten Pakets getragen werden, das der ersten Ziel-PDU entspricht, Folgendes umfasst:

Wiederherstellen von ersten codierten Informationen basierend auf ersten Informationen, die in Paket-Headern des V codierten Pakets getragen werden, das der ersten Ziel-PDU entspricht, wobei die ersten codierten Informationen durch Codieren von zweiten Informationen erzeugt werden, die zweiten Informationen die Menge von ursprünglichen Datenpaketen der ersten Ziel-PDU angeben, eine Länge der zweiten Informationen W Bits ist, eine Länge der ersten Informationen R Bits ist, $R \times V \geq W$ und sowohl W als auch R positive Ganzzahlen sind; und

Bestimmen der Menge von ursprünglichen Datenpaketen der ersten Ziel-PDU basierend auf den zweiten Informationen, die den ersten codierten Informationen entsprechen.

13. Kommunikationsvorrichtung, wobei die Vorrichtung einen Prozessor (1501) und einen Speicher (1502) umfasst; und der Speicher eine Programmanweisung umfasst, die, wenn sie von dem Prozessor ausgeführt wird, den Prozessor dazu veranlasst, das Verfahren nach einem der Ansprüche 1 bis 6 oder das Verfahren nach einem der Ansprüche 7 bis 12 durchzuführen.

14. Computerlesbares Speichermedium, umfassend Computeranweisungen, die, wenn sie von einem Computer ausgeführt werden, den Computer dazu veranlassen, das Verfahren nach einem der Ansprüche 1 bis 6 oder das Verfahren nach einem der Ansprüche 7 bis 12 durchzuführen.

15. Computerprogrammprodukt, umfassend Anweisungen, die, wenn das Programm von einem Computer ausgeführt wird, den Computer dazu veranlassen, das Verfahren nach einem der Ansprüche 1 bis 6 oder das Verfahren nach einem der Ansprüche 7 bis 12 durchzuführen.

**Revendications**

1. Procédé de codage de données, dans lequel le procédé comprend :

l'obtention (201) de S paquets codés correspondant à L premières unités de données de protocole, PDU, dans lequel une première PDU correspond à un ou plusieurs paquets codés, L est un entier positif et S est un entier positif ;

la réalisation (202) d'une cascade sur chacun des N groupes de paquets codés pour obtenir N secondes PDU, dans lequel les N groupes de paquets codés sont obtenus en divisant les S paquets codés, un groupe de paquets codés comprend un ou plusieurs paquets codés, différents groupes de paquets codés comprennent différents paquets codés, et deux paquets codés quelconques compris dans un même groupe de paquets codés correspondent à des premières PDU différentes ; une seconde PDU correspond à un groupe de paquets codés et comprend tous les paquets codés du groupe de paquets codés ; et un en-tête de PDU de la seconde PDU transporte un premier numéro de séquence et une bitmap, le premier numéro de séquence sert à déterminer un numéro de paquet codé correspondant au paquet codé compris dans la seconde PDU, la bitmap comprend H bits, un bit correspond à une première PDU, le bit indique si la seconde PDU comprend un paquet codé de la première PDU correspondant au bit, une quantité de paquets codés compris dans une seconde PDU est inférieure ou égale à H, et H est un entier positif ; et

la sortie (203) des N secondes PDU.

2. Procédé selon la revendication 1, dans lequel une quantité de paquets codés compris dans un groupe de paquets codés n'est pas supérieure à A, une quantité de paquets codés correspondant à une première PDU n'est pas supérieure à N, L est inférieur ou égal à H, A est inférieur ou égal à H, A est supérieur ou égal à L et A est un entier positif supérieur ou égal à 1.

3. Procédé selon la revendication 1, dans lequel une quantité de paquets codés compris dans un groupe de paquets codés n'est pas supérieure à A, une quantité totale de paquets codés correspondant à X premières PDU quelconques dans les L premières PDU n'est pas supérieure à N, $\lceil L \div X \rceil$ est inférieur ou égal à H, A est inférieur ou égal à H, A est supérieur ou égal à $\lceil L \div X \rceil$ et A et X sont tous deux des entiers positifs supérieurs à 1.

4. Procédé selon la revendication 1, dans lequel une quantité de paquets codés compris dans un groupe de paquets codés n'est pas supérieure à A, une quantité de paquets codés correspondant à une première PDU n'est pas supérieure à B, A est inférieur ou égal à L, A est inférieur ou égal à H, N=YxB, $Y = \lceil L \div A \rceil$, et A et Y sont tous deux des entiers positifs supérieurs à 1.

**5.** Procédé selon l'une quelconque des revendications 1 à 4, dans lequel un en-tête de paquet du paquet codé comprend des premières informations, et les premières informations sont utilisées pour déterminer une quantité de paquets de données d'origine de la première PDU correspondant au paquet codé.

**6.** Procédé selon la revendication 5, dans lequel le procédé comprend également :

le codage de secondes informations pour générer des premières informations codées, dans lequel les secondes informations indiquent la quantité de paquets de données d'origine de la première PDU, une longueur des secondes informations est de W bits, une longueur des premières informations codées est de E bits, $E \geq W$, et W et E sont tous deux des entiers positifs ; et
la première PDU correspond à M paquets codés, les premières informations dans les M paquets codés forment les premières informations codées, M est un entier positif et E est supérieur ou égal à M.

**7.** Procédé de décodage de données, dans lequel le procédé comprend :

l'obtention (205) de G secondes unités de données de protocoles PDU, dans lequel une seconde PDU corresponde à un groupe de paquets codés et comprend tous les paquets codés dans le groupe de paquets codés ; un groupe de paquets codés comprend un ou plusieurs paquets codés, différents groupes de paquets codés comprennent différents paquets codés, et deux paquets codés quelconques compris dans un même groupe de paquets codés correspondent à des premières PDU différentes ; et un en-tête de PDU de la seconde PDU transporte un premier numéro de séquence et une bitmap, le premier numéro de séquence sert à déterminer un numéro de paquet codé correspondant au paquet codé compris dans la seconde PDU, la bitmap comprend H bits, un bit correspond à une première PDU, le bit indique si la seconde PDU comprend un paquet codé dans la première PDU correspondant au bit, une quantité de paquets codés compris dans une seconde PDU est inférieure ou égale à H, et H est un entier positif ;
la segmentation (206) des G secondes PDU pour obtenir F paquets codés, dans lequel F est un entier positif ; et
la restauration (207) d'une ou de plusieurs premières PDU sur la base de premiers numéros de séquence et de bitmaps qui sont transportés dans des en-têtes de PDU des G secondes PDU.

**8.** Procédé selon la revendication 7, dans lequel une quantité de paquets codés compris dans un groupe de paquets codés n'est pas supérieure à A, une quantité de paquets codés correspondant à une première PDU n'est pas supérieure à N, les G secondes PDU correspondent aux L premières PDU, L est inférieur ou égal à H, A est inférieur ou égal à H, A est supérieur ou égal à L et L et A sont des entiers positifs supérieurs ou égal à 1.

**9.** Procédé selon la revendication 7, dans lequel une quantité de paquets codés compris dans un groupe de paquets codés n'est pas supérieure à A, les G secondes PDU correspondent à L premières PDU, une quantité totale de paquets codés correspondant à X premières PDU quelconques dans les L premières PDU n'est pas supérieure à N, $\lceil L \div X \rceil$ est inférieur ou égal à H, A est inférieur ou égal à H, A est supérieur ou égal à $\lceil L \div X \rceil$ et L, A et X sont tous des entiers positifs supérieurs à 1.

**10.** Procédé selon la revendication 7, dans lequel une quantité de paquets codés compris dans un groupe de paquets codés n'est pas supérieure à A, une quantité de paquets codés correspondant à une première PDU n'est pas supérieure à B, les G secondes PDU correspondent à L premières PDU, A est inférieur ou égal à L, A est inférieur ou égal à H, N=YxB, $Y = \lceil L \div A \rceil$, et A, L et Y sont tous des entiers positifs supérieurs à 1.

**11.** Procédé selon l'une quelconque des revendications 7 à 10, dans lequel la restauration d'une ou de plusieurs PDU comprend :

la détermination d'une quantité de paquets de données d'origine d'une première PDU cible sur la base de premières informations transportées dans un en-tête de paquet d'un paquet codé correspondant à la première PDU cible ; et
si dans les F paquets codés, une quantité V de paquets codés correspondant à la première PDU cible est supérieure ou égale à la quantité de paquets de données d'origine de la première PDU cible, la restauration de la première PDU cible sur la base des V paquets codés correspondant à la première PDU cible, dans lequel une quantité totale de paquets codés correspondant à la première PDU cible est M, V est inférieur ou égal à M, et V est un entier positif.

12. Procédé selon la revendication 11, dans lequel la détermination d'une quantité de paquets de données d'origine d'une première PDU cible, sur la base de premières informations transportées dans un en-tête de paquet d'un paquet codé correspondant à la première PDU cible, comprend :

la restauration de premières informations codées sur la base de premières informations transportées dans des en-têtes de paquet du paquet codé V correspondant à la première PDU cible, dans lequel les premières informations codées sont générées par le codage de secondes informations, les secondes informations indiquent la quantité de paquets de données d'origine de la première PDU cible, une longueur des secondes informations est de W bits, une longueur des premières informations est de R bits, $R \times V \geq W,$ et W et R sont tous deux des entiers positifs ; et
la détermination de la quantité de paquets de données d'origine de la première PDU cible sur la base des secondes informations correspondant aux premières informations codées.

13. Appareil de communication, dans lequel l'appareil comprend un processeur (1501) et une mémoire (1502) ; et la mémoire comprend une instruction de programme qui, lorsqu'elle est exécutée par le processeur, amène le processeur à réaliser le procédé selon l'une quelconque des revendications 1 à 6 ou le procédé selon l'une quelconque des revendications 7 à 12.

14. Support de stockage lisible par ordinateur, comprenant une instruction informatique qui, lorsqu'elle est exécutée par un ordinateur, amènent l'ordinateur à réaliser le procédé selon l'une quelconque des revendications 1 à 6, ou le procédé selon l'une quelconque des revendications 7 à 12.

15. Produit de programme informatique comprenant des instructions qui, lorsque le programme est exécutée par un ordinateur, amènent l'ordinateur à réaliser le procédé selon l'une quelconque des revendications 1 à 6, ou le procédé selon l'une quelconque des revendications 7 à 12.

FIG. 1

201: Obtain S encoded packets corresponding to L first PDUs

202: Perform cascading on each of N encoded packet groups to obtain N second PDUs, where the N encoded packet groups are obtained by dividing the S encoded packets, one encoded packet group includes one or more encoded packets, one second PDU corresponds to one encoded packet group and includes all encoded packets in the encoded packet group, and a PDU header of the second PDU carries a first sequence number and a bitmap

203: Output the N second PDUs

First communication device

204: The first communication device sends a target data packet to a second communication device

205: Obtain G second PDUs

206: Segment the G second PDUs to obtain F encoded packets

Second communication device

207: Restore one or more first PDUs based on first sequence numbers and bitmaps that are carried in PDU headers of the G second PDUs

FIG. 2

Second information: | 4 bits

Packet header of an encoded packet

First information

Encoding

First encoded information: | bit | bit | bit | bit | bit | bit | bit

Encoded packet: | 1 | 2 | 3 | 4 | 5 | 6 | 7

FIG. 3

Fourth information: | 12 bits

Packet header of an encoded packet

Third information

Encoding

Second encoded information: | 2 bits | 2 bits | 2 bits | 2 bits | 2 bits | 2 bits | 2 bits | 2 bits

Encoded packet: | 1 | 2 | 3 | 4 | 5 | 6 | 7 | 8

FIG. 4

Target first PDU

Padding

| Indication field | Target first PDU | Padding field |

Segmenting

| Original data packet 1 | Original data packet 2 | Original data packet 3 | ... | Original data packet K |

Encoding

| Encoded packet 1 | Encoded packet 2 | Encoded packet 3 | ... | Encoded packet K | ... | Encoded packet M |

FIG. 5

Encoded packets
corresponding to a
first PDU whose
sequence number is 1:

Encoded packets
corresponding to a
first PDU whose
sequence number is i:

Encoded packets
corresponding to a
first PDU whose
sequence number is L:

Encoded packet group 1

Encoded packet group 2

...

Encoded packet group M₁

Encoded packet group Mᵢ

Packet header
of an encoded
packet

FIG. 6

Encoded packet     Second PDU

Encoded packets
corresponding to a first
PDU whose sequence
number is 1:

Encoded packets
corresponding to a first
PDU whose sequence
number is i:

Encoded packets
corresponding to a first
PDU whose sequence
number is L:

Packet header of
an encoded
packet

PDU header of
a second PDU

FIG. 7

Encoded packets corresponding to a first PDU whose sequence number is 1:

Encoded packets corresponding to a first PDU whose sequence number is i:

Encoded packets corresponding to a first PDU whose sequence number is L:

Encoded packet

Second PDU

| Packet header of an encoded packet

■ PDU header of a second PDU

FIG. 8

FIG. 9

Encoded packet

Second PDU

Encoded packets corresponding to a first PDU whose sequence number is 1:

Encoded packets corresponding to a first PDU whose sequence number is i−1:

Encoded packets corresponding to a first PDU whose sequence number is L−1:

Encoded packets corresponding to a first PDU whose sequence number is 2

Encoded packets corresponding to a first PDU whose sequence number is i

Encoded packets corresponding to a first PDU whose sequence number is L

Packet header of an encoded packet

PDU header of a second PDU

FIG. 10

EP 4 440 016 B1

Encoded packet

Second PDU

Encoded packets corresponding to a first PDU whose sequence number is 1:

Encoded packets corresponding to a first PDU whose sequence number is i:

Encoded packets corresponding to a first PDU whose sequence number is A:

Encoded packets corresponding to a first PDU whose sequence number is A+1:

Encoded packets corresponding to a first PDU whose sequence number is j:

Encoded packets corresponding to a first PDU whose sequence number is L:

Packet header of an encoded packet

PDU header of a second PDU

FIG. 11

Encoded packets corresponding to a first PDU whose sequence number is 1:

Encoded packets corresponding to a first PDU whose sequence number is i:

Encoded packets corresponding to a first PDU whose sequence number is A:

Encoded packets corresponding to a first PDU whose sequence number is A+1:

Encoded packets corresponding to a first PDU whose sequence number is j:

Encoded packets corresponding to a first PDU whose sequence number is L:

Encoded packet

Second PDU

Packet header of an encoded packet

PDU header of a second PDU

FIG. 12

| D/C | R | R | Second sequence number |
|-----|---|---|------------------------|
| Second sequence number | | | |
| First sequence number | | | |
| Bitmap | | | |
| Bitmap | | | |

FIG. 13

1401

Communication
unit

1402

Processing unit

Communication apparatus

FIG. 14

Communication apparatus 1500

1501

Processor

1503

Instructions

1502

Memory

1504

Instructions

1505

Transceiver

1506

Antenna

FIG. 15

1603

Memory

1601

Processor

Chip

1602

Interface

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021169522 A1

- US 2007300134 A1

**Non-patent literature cited in the description**

- **WUNDERLICH SIMON et al.** Caterpillar RLNC (CRLNC): A Practical Finite Sliding Window RLNC Approach. *IEEE ACCESS*, vol. 5, 20183-20197